# EUROPEAN PATENT APPLICATION

(11) **EP 4 842 082 A1**
(43) Date of publication of application: **18.11.2026**
(21) Application number: 25751746.6
(22) Date of filing: 10.02.2025
(51) Int. Cl.: H04W 52/02

(54) **METHOD AND APPARATUS FOR TRANSMITTING LOW POWER WAKE UP SIGNAL (LPWUS)**

(30) Priority: 08.02.2024 CN 202410178107
(71) Applicant: Honor Device Co., Ltd., Shenzhen, Guangdong 518040 (CN)
(72) Inventor: PAN, Xiaogang, Shenzhen, Guangdong 518040 (CN); SHAN, Baokun, Shenzhen, Guangdong 518040 (CN)
(74) Representative: Goddar, Heinz J.
(86) International application number: PCT/CN2025/076716
(87) International publication number: WO 2025/168136

(57) **Abstract**

Embodiments of this application provide a low-power wake-up signal LPWUS transmission method and apparatus, and relate to the communication field. A relationship between an LPWUS and a PF/PO is defined, to reduce network resource overheads and reduce a paging delay. The method includes: A terminal device receives a first message from a network device. The first message includes N first offsets, and N is an integer greater than or equal to 1. The terminal device monitors an LPWUS from the network device at a time domain position of the LPWUS. The LPWUS is used to wake up an MR of the terminal device. The time domain position of the LPWUS is determined based on the N first offsets and a target paging frame PF, and the target PF is a PF in which the terminal device monitors a paging message.

## Description

This application claims priority to Chinese Patent Application No. 202410178107.9, filed with the China National Intellectual Property Administration on February 8, 2024 and entitled "LOW-POWER WAKE-UP SIGNAL LPWUS TRANSMISSION METHOD AND APPARATUS", which is incorporated herein by reference in its entirety.

### TECHNICAL FIELD

Embodiments of this application relate to the communication field, and in particular, to a low-power wake-up signal (low power wake up signal, LPWUS) transmission method and apparatus.

### BACKGROUND

Currently, an LPWUS is introduced into a communication standard. A terminal device may use a low-power wake-up receiver (low power wake up radio, LPWUR) to receive the LPWUS. After receiving the LPWUS, the LPWUR may wake up a main receiver (main radio, MR) of the terminal device, and the woken-up MR may receive a paging message. Before the MR is woken up by the LR, the MR may be in a sleep state (for example, ultra-deep sleep), and does not send or receive data, to save power.

A network side may send the LPWUS based on a service requirement (for example, when downlink data arrives). The terminal device may monitor the LPWUS to identify whether the terminal device is paged, and then wake up the MR in a timely manner, so that the MR can receive the paging message in a PF/PO corresponding to the terminal device. However, currently, a relationship between the LPWUS and the PF/PO is not defined in the communication standard.

### SUMMARY

Embodiments of this application provide an LPWUS transmission method and apparatus. A relationship between an LPWUS and a PF/PO is defined, to reduce network resource overheads and reduce a paging delay.

To achieve the foregoing objective, the following technical solutions are used in embodiments of this application:
According to a first aspect, a low-power wake-up signal LPWUS transmission method is provided, including: A terminal device receives a first message from a network device. The first message includes N first offsets, and N is an integer greater than or equal to 1. The terminal device monitors an LPWUS from the network device at a time domain position of the LPWUS. The LPWUS is used to wake up an MR of the terminal device. The time domain position of the LPWUS is determined based on the N first offsets and a target paging frame PF, and the target PF is a PF in which the terminal device monitors a paging message.

According to the method provided in this embodiment of this application, a relationship between the LPWUS and a PF (the PF may also be replaced with a PO) is defined. The terminal device may receive the N first offsets sent by the network device (for example, a base station), determine the time domain position of the LPWUS based on the N first offsets and the PF used to monitor the paging message, and monitor the LPWUS from the network device at the time domain position of the LPWUS, to wake up an MR of UE. In this way, the terminal device (for example, the UE) does not need to continuously start the MR, which can avoid a problem of a power consumption waste caused by starting the MR by the UE. After monitoring the LPWUS, the UE may start the MR to monitor the paging message in a timely manner, thereby reducing a paging delay.

In a possible implementation, that the time domain position of the LPWUS is determined based on the N first offsets and the target paging frame PF includes: the time domain position of the LPWUS is determined based on a target offset and the target PF, the target offset is determined from the N first offsets based on capability information of the MR of the terminal device, and the target offset is used to indicate an offset between the time domain position of the LPWUS and the target PF. The terminal device may determine the time domain position of the LPWUS based on the target offset and the target PF, to monitor the LPWUS from the network device at the time domain position of the LPWUS, and further wake up the MR of the UE. In this way, the UE does not need to continuously start the MR, which can avoid a problem of a power consumption waste caused by starting the MR by the UE. After monitoring the LPWUS, the UE may start the MR to monitor the paging message in a timely manner, thereby reducing a paging delay.

In a possible implementation, the method further includes: The terminal device sends a second message to the network device. The second message includes the capability information of the main receiver MR of the terminal device. The terminal device may determine the target offset from the N first offsets based on the capability information of the MR of the terminal device, and determine the time domain position of the LPWUS based on the target offset and the target PF, to monitor the LPWUS from the network device at the time domain position of the LPWUS, and further wake up the MR of the UE. In this way, the UE does not need to continuously start the MR, which can avoid a problem of a power consumption waste caused by starting the MR by the UE. After monitoring the LPWUS, the UE may start the MR to monitor the paging message in a timely manner, thereby reducing a paging delay.

In a possible implementation, the capability information of the MR includes MR starting duration; and the target offset is greater than or equal to the MR starting duration; or the target offset is greater than or equal to a sum of the MR starting duration and a second offset. The terminal device may determine the time domain position of the LPWUS based on the target offset and the target PF, to monitor the LPWUS from the network device at the time domain position of the LPWUS, and further wake up the MR of the UE. Because the target offset is greater than or equal to the MR starting duration or the target offset is greater than or equal to the sum of the MR starting duration and the second offset, the MR of the terminal device may monitor a PF in a timely manner after being started, thereby avoiding missing a paging message, and reducing a paging delay.

In a possible implementation, the target offset is a smallest first offset in M first offsets, the M first offsets belong to the N first offsets, and M is an integer less than or equal to N; and each of the M first offsets is greater than or equal to the MR starting duration, or each of the M first offsets is greater than or equal to the sum of the MR starting duration and the second offset. Because the target offset is the smallest first offset in the M first offsets, the MR of the terminal device may monitor a PF in a timely manner after being started, thereby avoiding a problem of a power consumption waste caused by starting the MR in advance.

In a possible implementation, the first message is a system broadcast message. The system information broadcast may include, for example, SIB1 or SIB2.

In a possible implementation, that the terminal device monitors an LPWUS from the network device at a time domain position of the LPWUS includes: The terminal device monitors the LPWUS from the network device in on-duration before or after the time domain position of the LPWUS. In this embodiment of this application, the time domain position of the LPWUS may be a start point of a time period. The base station may continuously send the LPWUS in the time period, and the UE may continuously receive the LPWUS in the time period, to wake up the MR of the UE. Alternatively, the base station may start a timer at the time domain position (namely, a start point of a time period) of the LPWUS, and continuously send the LPWUS during running of the timer, to wake up the MR of the UE. The UE may start a timer at the time domain position (namely, the start point of the time period) of the LPWUS, and continuously receive the LPWUS during running of the timer, to wake up the MR of the UE. The time period or timing duration of the timer may be one or more symbols or slots. This is not specifically limited in this application.

In a possible implementation, the terminal device does not receive the LPWUS from the network device if the MR starting duration indicated by the capability information of the MR of the terminal device is greater than any one of the N first offsets. The terminal device may use an original paging monitoring mechanism and always start the MR to monitor a paging message of the terminal device. In this way, a problem that the paging message is missed because the UE does not start the MR in a timely manner can be avoided, and the paging delay can be reduced.

According to a second aspect, a low-power wake-up signal LPWUS transmission method is provided, including: A network device sends a first message. The first message includes N first offsets, and N is an integer greater than or equal to 1. The network device sends an LPWUS at a time domain position of the LPWUS. The LPWUS is used to wake up an MR of a terminal device. The time domain position of the LPWUS is determined based on the N first offsets and a target paging frame PF, and the target PF is a PF in which the terminal device monitors a paging message.

According to the method provided in this embodiment of this application, a relationship between the LPWUS and a PF (the PF may also be replaced with a PO) is defined. The network device (for example, a base station) may send the N first offsets to the terminal device (for example, UE), determine the time domain position of the LPWUS based on the N first offsets and the PF used to monitor the paging message, and send the LPWUS from the network device at the time domain position of the LPWUS, to wake up an MR of the UE. In this way, the network device does not need to send a plurality of LPWUSs to wake up different UEs separately, thereby reducing network resource overheads. In addition, the UE does not need to continuously start the MR, which can avoid a problem of a power consumption waste caused by starting the MR by the UE. After monitoring the LPWUS, the UE may start the MR to monitor the paging message in a timely manner, thereby reducing a paging delay. The method provided in this embodiment of this application can achieve a balance between reducing power consumption, reducing the paging delay, and reducing network resource overheads.

In a possible implementation, that the time domain position of the LPWUS is determined based on the N first offsets and the target paging frame PF includes: the time domain position of the LPWUS is determined based on a target offset and the target PF, the target offset is determined from the N first offsets based on capability information of the MR of the terminal device, and the target offset is used to indicate an offset between the time domain position of the LPWUS and the target PF.

In a possible implementation, the method further includes: The network device receives a second message from the terminal device. The second message includes the capability information of the main receiver MR of the terminal device.

In a possible implementation, the capability information of the MR includes MR starting duration; and the target offset is greater than or equal to the MR starting duration; or the target offset is greater than or equal to a sum of the MR starting duration and a second offset.

In a possible implementation, the target offset is a smallest first offset in M first offsets, the M first offsets belong to the N first offsets, and M is an integer less than or equal to N; and each of the M first offsets is greater than or equal to the MR starting duration, or each of the M first offsets is greater than or equal to the sum of the MR starting duration and the second offset.

In a possible implementation, the first message is a system broadcast message.

In a possible implementation, that the network device sends an LPWUS at a time domain position of the LPWUS includes: The network device sends the LPWUS from the network device in on-duration before or after the time domain position of the LPWUS.

In a possible implementation, the method further includes: The network device sends the capability information of the MR of the terminal device to an access and mobility management function AMF network element.

According to a third aspect, a low-power wake-up signal LPWUS transmission method is provided, including: A terminal device receives a first message from a network device. The first message includes N pieces of index information and N first offsets, the N pieces of index information are in one-to-one correspondence with the N first offsets, each of the N pieces of index information is used to indicate a position of a paging frame PF, and N is an integer greater than or equal to 1. The terminal device monitors an LPWUS at a time domain position of the LPWUS. The LPWUS is used to wake up a main receiver MR of the terminal device. The time domain position of the LPWUS is determined based on the N pieces of index information and the N first offsets.

According to the method provided in this embodiment of this application, a relationship between the LPWUS and a PF (the PF may also be replaced with a PO) is defined. The terminal device may receive the N first offsets and the N pieces of index information that are sent by the network device (for example, a base station), determine the time domain position of the LPWUS based on the N first offsets and the N pieces of index information, and monitor the LPWUS from the network device at the time domain position of the LPWUS, to wake up an MR of UE. In this way, the terminal device (for example, the UE) does not need to continuously start the MR, which can avoid a problem of a power consumption waste caused by starting the MR by the UE. After monitoring the LPWUS, the UE may start the MR to monitor the paging message in a timely manner, thereby reducing a paging delay.

In a possible implementation, that the time domain position of the LPWUS is determined based on the N pieces of index information and the N first offsets includes: the time domain position of the LPWUS is determined based on a target offset and a target PF that correspond to the terminal device, the target PF is determined based on target index information, the target index information is determined based on the N pieces of index information, the target offset is determined based on the N first offsets, and the target offset is used to indicate an offset between the time domain position of the LPWUS and the target PF. The terminal device may determine the time domain position of the LPWUS based on the target offset and the target PF, to monitor the LPWUS from the network device at the time domain position of the LPWUS, and further wake up the MR of the UE. In this way, the UE does not need to continuously start the MR, which can avoid a problem of a power consumption waste caused by starting the MR by the UE. After monitoring the LPWUS, the UE may start the MR to monitor the paging message in a timely manner, thereby reducing a paging delay.

In a possible implementation, the target PF is a PF in which a plurality of terminal devices whose MR starting duration is the same as or similar to MR starting duration of the terminal device monitor a paging message. In this way, one LPWUS may be used to wake up MRs of a plurality of UEs corresponding to a same PF, thereby reducing network resource overheads.

In a possible implementation, the target PF satisfies the following formula: $\left(SFN+PF_offset\right) mod T = \left(T div N\right) * \left(index mod N\right)$

SFN indicates a system frame number, PF_offset indicates an offset of a PF, T indicates a discontinuous reception DRX cycle, N indicates a quantity of PFs in the DRX cycle, index indicates a position of the target PF in the DRX cycle, and index≤N.

In a possible implementation, the first message further includes N first parameters, and the N first parameters are in one-to-one correspondence with the N pieces of index information; and that the target PF is determined based on the target index information includes: the target PF is determined based on the target index information and a target first parameter, the target first parameter is determined based on the N first parameters, the target index information is used to indicate a start position of the target PF, and the target first parameter is used to indicate a quantity of target PFs.

In a possible implementation, the target PF satisfies the following formula: $\left(SFN+PF_offset\right) mod T = \left(T div N\right) * \left(\left(index+offset_1\right) mod N\right)$

SFN indicates a system frame number, PF_offset indicates an offset of a PF, T indicates a DRX cycle, N indicates a quantity of PFs in the DRX cycle, index indicates a start position of the target PF in the DRX cycle, index≤N, offset_1=UE_ID mod DistrLen, DistrLen indicates the quantity of target PFs, and UE_ID indicates an identifier of the terminal device.

According to a fourth aspect, a low-power wake-up signal LPWUS transmission method is provided, including: A network device sends a first message. The first message includes N pieces of index information and N first offsets, the N pieces of index information are in one-to-one correspondence with the N first offsets, each of the N pieces of index information is used to indicate a position of a paging frame PF, and N is an integer greater than or equal to 1. The network device sends an LPWUS at a time domain position of the LPWUS. The LPWUS is used to wake up a main receiver MR of the terminal device. The time domain position of the LPWUS is determined based on the N pieces of index information and the N first offsets.

According to the method provided in this embodiment of this application, a relationship between the LPWUS and a PF (the PF may also be replaced with a PO) is defined. The network device (for example, a base station) may send the N first offsets and the N pieces of index information to the terminal device (for example, UE), determine the time domain position of the LPWUS based on the N first offsets and the N pieces of index information, and send the LPWUS from the network device at the time domain position of the LPWUS, to wake up an MR of the UE. In this way, the network device does not need to send a plurality of LPWUSs to wake up different UEs separately, thereby reducing network resource overheads. In addition, the UE does not need to continuously start the MR, which can avoid a problem of a power consumption waste caused by starting the MR by the UE. After monitoring the LPWUS, the UE may start the MR to monitor the paging message in a timely manner, thereby reducing a paging delay. The method provided in this embodiment of this application can achieve a balance between reducing power consumption, reducing the paging delay, and reducing network resource overheads.

In a possible implementation, that the time domain position of the LPWUS is determined based on the N pieces of index information and the N first offsets includes: the time domain position of the LPWUS is determined based on a target offset and a target PF that correspond to the terminal device, the target PF is determined based on target index information, the target index information is determined based on the N pieces of index information, the target offset is determined based on the N first offsets, and the target offset is used to indicate an offset between the time domain position of the LPWUS and the target PF.

In a possible implementation, the target PF is a PF in which a plurality of terminal devices whose MR starting duration is the same as or similar to MR starting duration of the terminal device monitor a paging message.

In a possible implementation, the target PF satisfies the following formula: $\left(SFN+PF_offset\right) mod T = \left(T div N\right) * \left(index mod N\right)$

SFN indicates a system frame number, PF_offset indicates an offset of a PF, T indicates a discontinuous reception DRX cycle, N indicates a quantity of PFs in the DRX cycle, index indicates a position of the target PF in the DRX cycle, and index≤N.

In a possible implementation, the first message further includes N first parameters, and the N first parameters are in one-to-one correspondence with the N pieces of index information; and that the target PF is determined based on the target index information includes: the target PF is determined based on the target index information and a target first parameter, the target first parameter is determined based on the N first parameters, the target index information is used to indicate a start position of the target PF, and the target first parameter is used to indicate a quantity of target PFs.

In a possible implementation, the target PF satisfies the following formula: $\left(SFN+PF_offset\right) mod T = \left(T div N\right) * \left(\left(index+offset_1\right) mod N\right)$

SFN indicates a system frame number, PF_offset indicates an offset of a PF, T indicates a DRX cycle, N indicates a quantity of PFs in the DRX cycle, index indicates a start position of the target PF in the DRX cycle, index≤N, offset_1=UE_ID mod DistrLen, DistrLen indicates the quantity of target PFs, and UE_ID indicates an identifier of the terminal device.

According to a fifth aspect, an embodiment of this application further provides a communication apparatus. The communication apparatus may be a terminal device or a chip. The communication apparatus includes a processor, configured to implement any LPWUS transmission method provided in the first aspect or the third aspect. The communication apparatus may further include a memory, configured to store program instructions and data. The memory may be a memory integrated in the communication apparatus, or an off-chip memory disposed outside the communication apparatus. The memory is coupled to the processor, and the processor may invoke and execute the program instructions stored in the memory, to implement any LPWUS transmission method provided in the first aspect or the third aspect. The communication apparatus may further include a communication interface. The communication interface is used by the communication apparatus to communicate with another device (for example, a network device).

According to a sixth aspect, an embodiment of this application further provides a communication apparatus. The communication apparatus may be a network device or a chip. The communication apparatus includes a processor, configured to implement any LPWUS transmission method provided in the second aspect or the fourth aspect. The communication apparatus may further include a memory, configured to store program instructions and data. The memory may be a memory integrated in the communication apparatus, or an off-chip memory disposed outside the communication apparatus. The memory is coupled to the processor, and the processor may invoke and execute the program instructions stored in the memory, to implement any LPWUS transmission method provided in the second aspect or the fourth aspect. The communication apparatus may further include a communication interface. The communication interface is used by the communication apparatus to communicate with another device (for example, a terminal device).

According to a seventh aspect, an embodiment of this application provides a computer-readable storage medium, including instructions. When the instructions are run on a computer, the computer is enabled to perform any LPWUS transmission method provided in any one of the first aspect to the fourth aspect.

According to an eighth aspect, an embodiment of this application provides a computer program product including instructions. When the computer program product is run on a computer, the computer is enabled to perform any LPWUS transmission method provided in any one of the first aspect to the fourth aspect.

According to a ninth aspect, an embodiment of this application provides a chip system. The chip system includes a processor, and may further include a memory, configured to implement any LPWUS transmission method provided in any one of the first aspect to the fourth aspect. The chip system may include a chip, or may include a chip and another discrete component.

According to a tenth aspect, an embodiment of this application provides a communication system. The system includes the communication apparatus in the fifth aspect and the communication apparatus in the sixth aspect.

### BRIEF DESCRIPTION OF DRAWINGS

FIG. 1 is a schematic diagram of a PF and a PO in a DRX cycle according to an embodiment of this application;
FIG. 2 is a schematic diagram of a subgroup according to an embodiment of this application;
FIG. 3 is a schematic diagram of a structure of UE according to an embodiment of this application;
FIG. 4 is a schematic diagram of a coverage area of an LPWUS according to an embodiment of this application;
FIG. 5 is a schematic diagram of a network architecture according to an embodiment of this application;
FIG. 6 is a schematic structural diagram of a terminal device according to an embodiment of this application;
FIG. 7 is a schematic diagram of a structure of a network device according to an embodiment of this application;
FIG. 8 is a schematic diagram of a time domain position of an LPWUS according to an embodiment of this application;
FIG. 9 is a schematic diagram of a time domain position of another LPWUS according to an embodiment of this application;
FIG. 10 is a schematic diagram of signal interaction according to an embodiment of this application;
FIG. 11 is a schematic diagram of a time domain position of another LPWUS according to an embodiment of this application;
FIG. 12 is a schematic diagram of a time domain position of another LPWUS according to an embodiment of this application;
FIG. 13 is a schematic diagram of other signal interaction according to an embodiment of this application;
FIG. 14A is a schematic diagram of a time domain position of another LPWUS according to an embodiment of this application;
FIG. 14B is a schematic diagram of a time domain position of another LPWUS according to an embodiment of this application;
FIG. 15 is a schematic diagram of other signal interaction according to an embodiment of this application;
FIG. 16 is a schematic structural diagram of another terminal device according to an embodiment of this application; and
FIG. 17 is a schematic structural diagram of another network device according to an embodiment of this application.

### DESCRIPTION OF EMBODIMENTS

For clear and concise descriptions of the following embodiments, a brief introduction to a related concept or technology is first provided.

Air interface paging mechanism: A network side may send a paging message to a terminal device in an idle state (idle state), an inactive state (inactive state), or a connected state (connected state) to perform paging. It may be understood that, when a terminal device has been registered with a network, the terminal device is in a connected state when there is a radio resource control (radio resource control, RRC) connection between the terminal device and a base station; and the terminal device is in an idle state when there is no RRC connection between the terminal device and the base station. When there is a radio resource control connection between the terminal device and the base station, but there is no connection between the terminal device and a core network, the terminal device is in an inactive state.

A paging process may be triggered by the core network. For example, when the core network needs to send data or signaling to the terminal device or requires the terminal device to perform reattachment, the core network may send, by using an AMF, a paging message to the base station to initiate a paging process. After receiving the paging message, the base station pages the terminal device by sending the paging message to the terminal device. The paging process may alternatively be triggered by the base station. For example, after cell system information changes, or when the base station needs to notify the terminal device to receive information such as an earthquake, an earthquake and tsunami warning system (earthquake and tsunami warning system, ETWS), or a commercial mobile alert service (commercial mobile alert service, CMAS), the base station may send a paging message to the terminal device to page the terminal device.

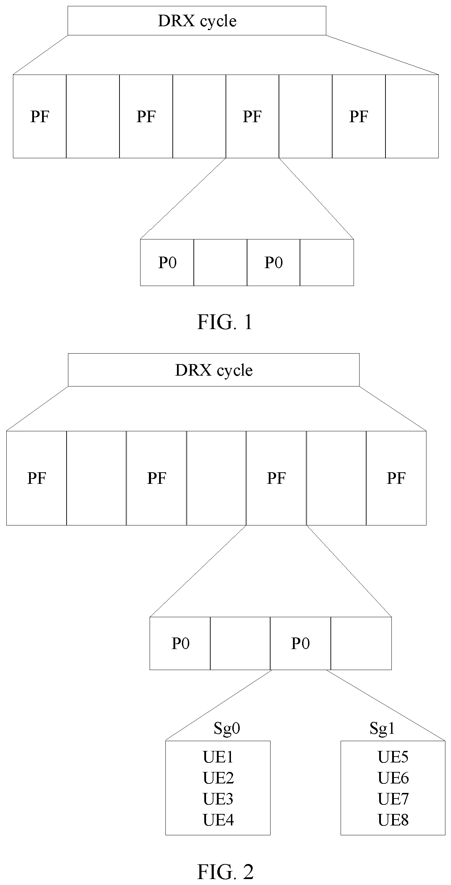

In the idle state, the terminal device may receive the paging message in a discontinuous reception (discontinuous reception, DRX) manner to reduce power consumption. As shown in FIG. 1, one DRX cycle may include a plurality of radio frames, a part of the plurality of radio frames are used to transmit a paging message, and the part of the radio frames that is used to transmit the paging message may be referred to as a paging frame (paging frame, PF). Each paging frame may include a plurality of subframes, a part of the plurality of subframes may be used to transmit a paging message, and the part of the subframes may be referred to as a paging occasion (paging occasion, PO). The terminal device may read a physical downlink control channel (physical downlink control channel, PDCCH) on a PO corresponding to the terminal device, to determine whether the PDCCH carries a paging radio network temporary identifier (paging radio network temporary identity, P-RNTI); and further determine whether a corresponding physical downlink shared channel (physical downlink shared channel, PDSCH) carries a paging message. If the terminal device determines that the PDCCH carries the P-RNTI, the terminal device may read content of the paging message from the corresponding PDSCH. If the terminal device determines that the PDCCH does not carry the P-RNTI, the terminal device does not need to receive the PDSCH, and may sleep based on the DRX cycle, to reduce power consumption.

A frame number of a PF and a subframe number of a PO that correspond to the terminal device may be determined based on parameters such as an international mobile subscriber identity (international mobile subscriber identification number, IMSI) and a DRX cycle of the terminal device.

For example, in a 5G communication system, the frame number of the PF satisfies Formula (1): $\left(SFN+PF_offset\right) mod T = \left(T div N\right) * \left(UE_ID mod N\right)$ (1)

SFN indicates a system frame number (system frame number). PF_offset indicates an offset of the PF, and T indicates the DRX cycle. For example, the DRX cycle may be 32, 64, 128, or 256 radio frames. N=min(T, nB), and nB indicates a quantity of paging groups. UE_ID=IMSI mod 4096.

The subframe number i_s of the PO satisfies Formula (2): $i _ s = floor \left(UE_ID/N\right) mod Ns$ (2)

Ns=max(1, nB/T). "floor(UE_ID/N)" indicates that a quotient of (UE_ID/N) is rounded down. For other parameters, refer to the foregoing related descriptions. Details are not described herein again.

To save power of the terminal device as much as possible, a paging early indication (paging early indication, PEI) is introduced in a communication standard. In the PEI mechanism, a plurality of terminal devices that monitor a same PO may be grouped into a plurality of subgroups (subgrouping/Subgroup), and a paging indication is sent for the subgroups. For example, as shown in FIG. 2, eight terminal devices (including UE1-UE8) that monitor a PO (for example, PO1) may be divided into two subgroups (for example, a subgroup 0 (sg0) and a subgroup 1 (sg1)). The subgroup 0 may include UE1-UE4, and the subgroup 1 may include UE5-UE8.

The network side may send the paging indication to a terminal device in an idle state or an inactive state in advance, so that the terminal device determines, based on the paging indication, whether a subgroup to which the terminal device belongs has a related paging message on the PO. If the subgroup to which the terminal device belongs has a related paging message on the PO, the terminal device may monitor the PO; or if the subgroup to which the terminal device belongs does not have a related paging message on the PO, the terminal device may sleep, thereby saving energy.

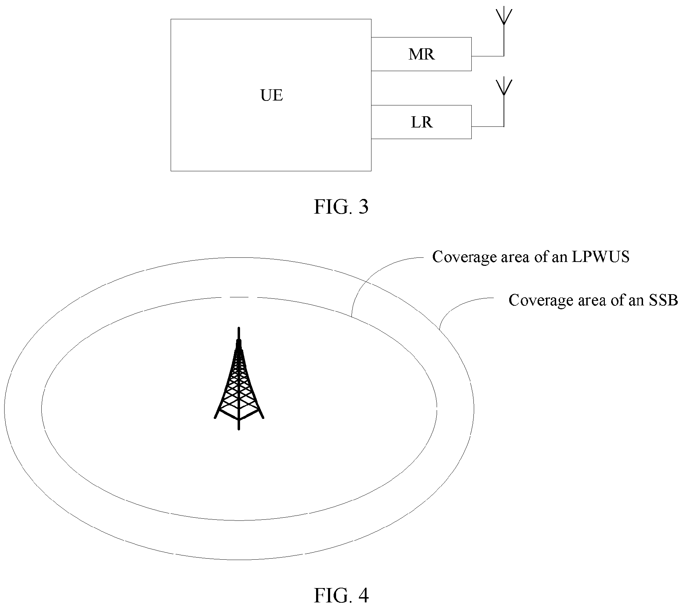

LPWUS mechanism: As shown in FIG. 3, in the LPWUS mechanism, a terminal device may include a main receiver (MR) and a low-power wake-up receiver (LPWUR). LPWUR may be referred to as LR for short. The LR may be configured to receive and process a signal related to a low-power wake-up signal, for example, an LPWUS. The MR may be configured to send and receive data. The LR has lower power consumption than the MR.

If the terminal device supports a low-power wake-up signal function, in an idle state or an inactive state, the MR of the terminal device may enter a sleep state (for example, an ultra-deep sleep state) when a signal quality threshold configured by a network system information broadcast (for example, an SIB) is satisfied, that is, the MR may be disabled, to save power. The terminal device may receive, by using the LR, an LPWUS sent by a base station. After receiving the LPWUS, the LR may wake up the MR. The woken-up MR may send and receive data, for example, may receive a paging message. As shown in FIG. 4, a coverage area of the LPWUS may be smaller than a coverage area of a synchronization signal/physical broadcast channel block ((synchronization signal, SS)/(physical broadcast channel, PBCH) block, SSB).

In embodiments of this application, the LPWUR may also be referred to as a low-power wake-up radio or a low-power wake-up communication module. The LPWUS may also be denoted as LP WUS or LP-WUS. This is not specifically limited in this application.

Currently, a network side may send the LPWUS based on a service requirement (for example, when downlink data arrives). The terminal device may monitor the LPWUS to identify whether the terminal device is paged, and then wake up the MR in a timely manner, so that the MR can receive the paging message in a PF/PO corresponding to the terminal device. However, currently, a relationship between the LPWUS and the PF/PO is not defined in the communication standard.

Embodiments of this application provide an LPWUS transmission method and apparatus. A relationship between an LPWUS and a PF/PO is defined, to reduce network resource overheads and reduce power consumption.

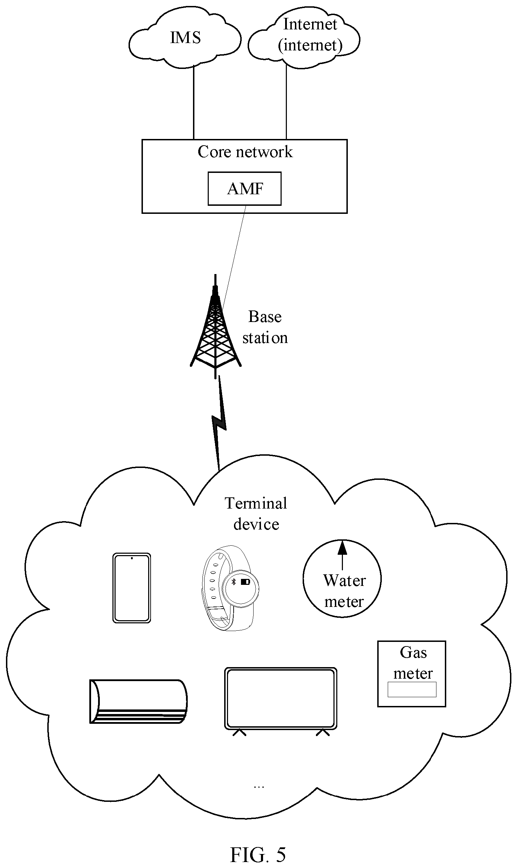

FIG. 5 is a schematic diagram of an example of a network architecture according to an embodiment of this application. As shown in FIG. 5, the network architecture may include a terminal device, a network device (for example, a base station), a core network, and an IMS or the internet/internet (Internet). The following describes the network architecture in detail:
(1) The terminal device may be a device that includes a wireless transceiver function and that may cooperate with the network device (for example, the base station) to provide a communication service for a user.

The terminal device provided in this embodiment of this application may be user equipment (user equipment, UE), a wearable electronic device (also referred to as a wearable device), or an internet of things (internet of things, IoT) device. For example, the user equipment may be a device such as a mobile phone, a tablet computer, a desktop computer, a laptop computer, an ultra-mobile personal computer (ultra-mobile personal computer, UMPC), a handheld computer, a netbook, a personal digital assistant (personal digital assistant, PDA), or a vehicle. The wearable electronic device may be, for example, a smart watch, smart glasses, a wireless locator, a tracker (Tracker), smart gloves, a smart clothing, or smart shoes. The IoT device may be, for example, a gas meter, a water meter, a smoke sensor, a vehicle-mounted device (for example, a vehicle-mounted speaker or a vehicle-mounted air conditioner), a washing machine, a refrigerator, an electric cooker, a television, a speaker, a coffee maker, a soy milk maker, a bread maker, or a printer.

The technical solution provided by this application may be applied to a 5G mobile communication system, new radio (new radio, NR), or the like, and may be further applied to a future communication system, for example, a sixth generation mobile communication system. The communication system may be a futured evolved public land mobile network (public land mobile network, PLMN), a device-to-device (device to device, D2D) network, a machine-to-machine (machine to machine, M2M) network, an internet of things (internet of things, IoT) network, or another network. This is not limited in this application.

(2) The network device may be an access network device, for example, a base station. The base station may be a base station in a 4^{th} generation (4^{th} generation, 4G) mobile communication system or a base station in a 5^{th} generation (5^{th} generation, 5G) mobile communication system. The 4G base station may be an evolved NodeB (evolved NodeB, eNB or eNodeB) in long term evolution (long term evolution, LTE), and the 5G base station may be a gNB in new radio (new radio, NR). The base station in NR may also be referred to as a transmission reception point (transmission reception point, TRP).

It may be understood that the network device is responsible for using a wired or wireless connection and communication technology to aggregate the terminal device to the core network (also referred to as a backbone network), to establish a connection with a network. An access network is an edge part of the entire network and a part closest to a user, and is usually referred to as "the last mile".

(3) Core network: Main functions are to provide user connections, manage users, carry services, and serve as a bearer network to provide an interface to an external network. Establishment of user connections includes functions such as mobility management (MM), call management (CM), switching/routing, and recording notification (completing a relationship of connecting to a peripheral device of an intelligent network by combining a service of the intelligent network).

It should be understood that a core network of the 4G network is an evolved packet core (evolved packet core, EPC) network. The EPC network is a core network of the 4G mobile communication network. The EPC network belongs to the core network, has conventional capabilities of a mobile network, such as user subscription data storage, mobility management, and data exchange, and provides ultra-high-speed Internet access experience for users. A core network of the 5G network is 5G Core (which may be abbreviated as 5GC). The 5GC replaces a dedicated communication device in the 4G network with a general network function virtualization device. The core network in the network architecture shown in FIG. 5 may be obtained by integrating the EPC and the 5GC. In other words, the core network in the network architecture may include a network element in the EPC, and may also include a network element in the 5GC.

The core network may include an access and mobility management function (access and mobility management function, AMF) network element. The AMF network element is responsible for an access and mobility management function. The AMF network element may receive non-access stratum (non-access stratum, NAS) signaling (including session management (session management, SM) signaling) of the terminal device and related signaling of the network device, and complete a user registration procedure, SM signaling forwarding, and mobility management.

It may be understood that the core network in the network architecture shown in FIG. 5 may further include another device, a network element, a network entity, or a network subsystem, for example, a session management function (session management function, SMF) network element or a policy control function (policy control function, PCF) network element. This is not limited in this application. It should be noted that a distribution manner of each network element in the core network is not limited in this application. For the distribution manner, refer to a related technical document. This is not elaborated in this application.

Each network element in the core network may also be referred to as a functional entity, and may be a network element implemented on dedicated hardware, or a software instance running on the dedicated hardware, or an instance of a virtualized function on an appropriate platform.

It should be understood that names of all network elements in this application are merely examples. In future communication, for example, 6G, the network element may be referred to as another name, or in future communication, for example, 6G, the network element in this application may alternatively be replaced with another entity, a device, or the like having a same function. This is not limited in this application. This is uniformly described herein, and details are not described below again. Optionally, the network elements in this embodiment of this application may be communication devices, or may be chips, chip systems, or the like that may be used in the communication devices. This is not limited in this embodiment of this application.

(4) The IMS is a network system architecture that provides voice and multimedia communication services (such as a voice, a video, and a text message) based on an internet protocol (internet protocol, IP) network. The IMS may implement secure and reliable multimedia communication between different devices of different networks. An architectural model provides a unified basic structure and a general mechanism for controlling, operating, routing, and managing sessions, and for implementing authentication, authorization, and accounting control. The IMS specification includes a widely used internet engineering task force (internet engineering task force, IETF) recommendation, for example, a session initiation protocol (session initialization protocol, SIP) used for session control signaling.

The Internet generally refers to an interconnected network, is also referred to as an international network, and refers to a vast network formed by connecting networks in series. These networks are connected by using a group of common protocols, to form a logically single and vast international network. From a perspective of network communication, the Internet is a data communication network that connects computer networks across various countries, regions, and institutions globally by using a transmission control protocol (transmission control protocol, TCP)/Internet protocol.

It should be noted that the network architecture shown in FIG. 5 is not limited to including only the device and the networks in the figure, and may further include another device that is not shown in the figure. Examples are not described one by one again in this application.

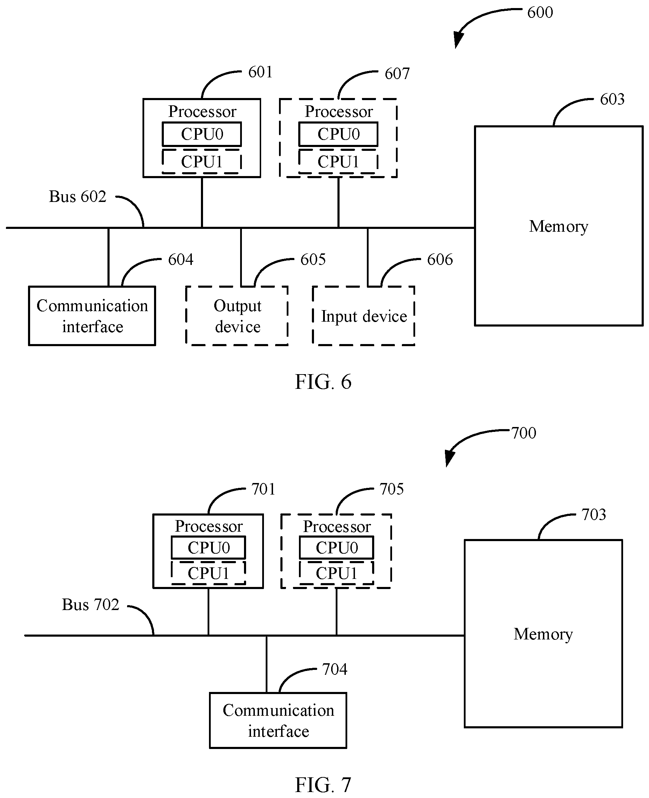

For example, an apparatus for implementing the function of the terminal device provided in embodiments of this application may be implemented by using an apparatus 600 in FIG. 6. FIG. 6 is a schematic structural diagram of hardware of an apparatus 600 according to an embodiment of this application. The apparatus 600 includes at least one processor 601, configured to implement the function of the terminal device provided in embodiments of this application. The apparatus 600 may further include a bus 602 and at least one communication interface 604. The apparatus 600 may further include a memory 603.

In this embodiment of this application, the processor may be a central processing unit (central processing unit, CPU), a general-purpose processor, a network processor (network processor, NP), a digital signal processor (digital signal processing, DSP), a microprocessor, a microcontroller, or a programmable logic device (programmable logic device, PLD). The processor may alternatively be any other apparatus having a processing function, for example, an application-specific integrated circuit (application-specific integrated circuit, ASIC), a field programmable gate array (Field Programmable Gate Array, FPGA) or another programmable logic device, a transistor logic device, a hardware component, a software module, or any combination thereof.

The bus 602 may be configured to transfer information between the foregoing components.

The communication interface 604 is configured to communicate with another device or communication network, for example, the Ethernet, a radio access network (radio access network, RAN), or a wireless local area network (wireless local area networks, WLAN). The communication interface 604 may be an interface, a circuit, a transceiver, or another apparatus that can implement communication. This is not limited in this application. The communication interface 604 may be coupled to the processor 601. The coupling in this embodiment of this application may be an indirect coupling or a communication connection between apparatuses, units, or modules in an electrical form, a mechanical form, or another form, and is used for information exchange between the apparatuses, the units, or the modules.

In this embodiment of this application, the memory may be a read-only memory (read-only memory, ROM) or another type of static storage device that may store static information and instructions, or a random access memory (random access memory, RAM) or another type of dynamic storage device that may store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be accessed by a computer and that can be configured to carry or store expected program code in a form of instructions or a data structure. However, the memory is not limited thereto. The memory may exist independently, or may be coupled to the processor, for example, through the bus 602. Alternatively, the memory may be integrated with the processor.

The memory 603 is configured to store program instructions, which may be controlled and executed by the processor 601, to implement the LPWUS transmission method provided in the following embodiments of this application. The processor 601 is configured to invoke and execute the instructions stored in the memory 603, to implement the LPWUS transmission method provided in the following embodiments of this application.

Optionally, the computer-executable instructions in this embodiment of this application may also be referred to as application program code. This is not specifically limited in this embodiment of this application.

Optionally, the memory 603 may be included in the processor 601.

During specific implementation, in an embodiment, the processor 601 may include one or more CPUs, for example, CPU0 and CPU1 in FIG. 6.

During specific implementation, in an embodiment, the apparatus 600 may include a plurality of processors such as the processor 601 and a processor 607 in FIG. 6. Each of these processors may be a single-core (single-CPU) processor, or may be a multi-core (multi-CPU) processor. The processor herein may be one or more devices, circuits, and/or processing cores configured to process data (for example, computer program instructions).

During specific implementation, in an embodiment, the apparatus 600 may further include an output device 605 and an input device 606. The output device 605 is coupled to the processor 601, and may display information in a plurality of manners. For example, the output device 605 may be a liquid crystal display (liquid crystal display, LCD), a light emitting diode (light emitting diode, LED) display device, a cathode ray tube (cathode ray tube, CRT) display device, or a projector (projector). The input device 606 is coupled to the processor 601, and may receive an input of a user in a plurality of manners. For example, the input device 606 may be a touchscreen device or a sensor device.

An apparatus with a function of the network device provided in embodiments of this application may be implemented by using an apparatus 700 in FIG. 7. FIG. 7 is a schematic structural diagram of hardware of an apparatus 700 according to an embodiment of this application. The apparatus 700 includes at least one processor 701, configured to implement the function of the terminal device provided in embodiments of this application. The apparatus 700 may further include a bus 702 and at least one communication interface 704. The apparatus 700 may further include a memory 703.

The bus 702 may be configured to transfer information between the foregoing components.

The communication interface 704 is configured to communicate with another device or a communication network, such as the Ethernet, a RAN, and a WLAN. The communication interface 704 may be an interface, a circuit, a transceiver, or another apparatus that can implement communication. This is not limited in this application. The communication interface 704 may be coupled to the processor 701.

The memory 703 is configured to store program instructions, which may be controlled and executed by the processor 701, to implement the LPWUS transmission method provided in the following embodiments of this application. For example, the processor 701 is configured to invoke and execute the instructions stored in the memory 703, to implement the LPWUS transmission method provided in the following embodiments of this application.

Optionally, the memory 703 may be included in the processor 701.

During specific implementation, in an embodiment, the processor 701 may include one or more CPUs, for example, CPU0 and CPU1 in FIG. 7.

During specific implementation, in an embodiment, the apparatus 700 may include a plurality of processors such as the processor 701 and a processor 705 in FIG. 7. Each of these processors may be a single-core processor, or may be a multi-core processor. The processor herein may be one or more devices, circuits, and/or processing cores configured to process data (for example, computer program instructions). The apparatus 700 may be a device having a similar structure to the apparatus 600. This is not limited in this embodiment of this application.

The apparatus 700 may be a general-purpose device or a dedicated device. During specific implementation, the apparatus 700 may be an access network device, for example, a base station. The base station may be a 4G base station, for example, an eNodeB, or may be a 5G base station, for example, a gNB.

The terminal device or the network device in this embodiment of this application may be implemented by one device, or may be a functional module in one device. This is not specifically limited in this embodiment of this application. It may be understood that the foregoing functions may be a network element in a hardware device, or may be a software function running on dedicated hardware, or may be a virtualized function instantiated on a platform (for example, a cloud platform), or may be a chip system. In this embodiment of this application, the chip system may include a chip, or may include a chip and another discrete component.

An operating system of the terminal device may be an Android (Android) system, an Android system lightweight internet of things operating system (lite OS), a linux system, a dual-frame system, or another operating system. This is not limited in this embodiment of this application.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

The following describes technical solutions in embodiments of this application with reference to the accompanying drawings in embodiments of this application. In descriptions of this application, "/" means "or" unless otherwise specified. For example, A/B may indicate A or B. In this specification, "and/or" describes only an association relationship between associated objects and indicates that three relationships may exist. For example, A and/or B may indicate the following three cases: Only A exists, both A and B exist, and only B exists. In addition, in the description of this application, unless otherwise specified, "at least one" means one or more. "A plurality of" means two or more. In addition, to clearly describe the technical solutions in embodiments of this application, words such as "first" and "second" are used in embodiments of this application to distinguish between same items or similar items whose functions and effects are substantially the same. A person skilled in the art may understand that the words such as "first" and "second" do not limit a quantity or an execution order, and the words such as "first" and "second" do not define a definite difference.

Names of messages between network elements in the following embodiments of this application, names of parameters in messages, or the like are merely examples, and there may be other names in specific implementation. This is not specifically limited in embodiments of this application.

For ease of understanding, the following specifically describes the LPWUS transmission method provided in embodiments of this application with reference to accompanying drawings.

In a related technology, MR starting duration of a plurality of terminal devices that monitor a same PF/PO may be different. For example, MR starting duration of a terminal device with a relatively strong capability is relatively short, and MR starting duration of a terminal device with a relatively weak capability is relatively long.

In some embodiments of this application, for different terminal devices that monitor a same PF/PO, a base station may deliver LPWUSs at different time domain positions before the PF/PO based on MR starting duration of different terminal devices, to separately wake up the different terminal devices.

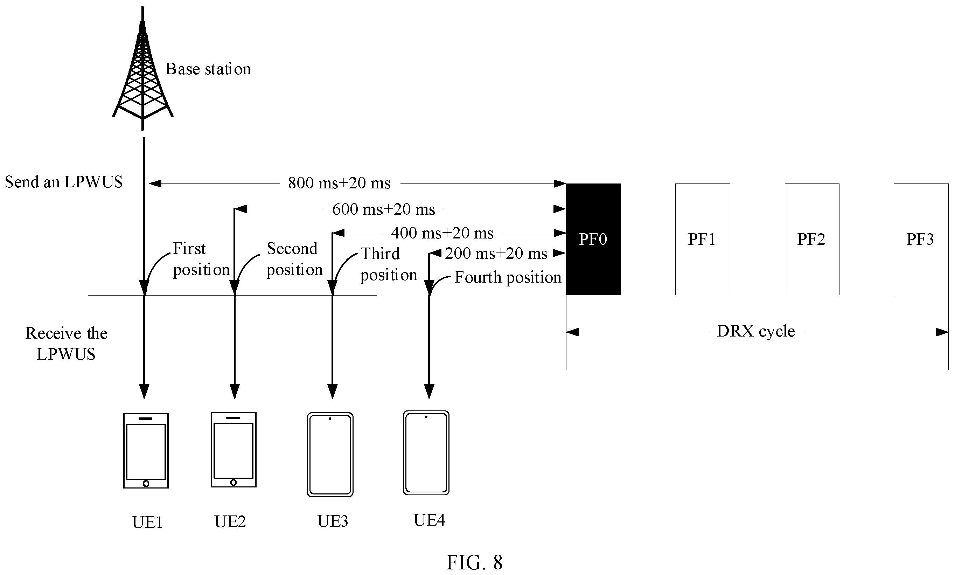

For example, as shown in FIG. 8, an example in which the terminal device is UE is used. It is assumed that UE1, UE2, UE3, and UE4 all are allocated to PF0 (that is, all PFs monitored by UE1-UE4 are the same, that is, all are PF0.). MR starting duration of UE1 is 800 ms, MR starting duration of UE2 is 600 ms, MR starting duration of UE3 is 400 ms, and MR starting duration of UE4 is 200 ms. The base station may deliver LPWUSs at different time domain positions based on MR starting duration of different UEs. For example, the base station may send the LPWUS in on-duration before or after a first position (a time domain position), to wake up UE1. For example, the first position may be a position at 800 ms+20 ms (20 ms may be an offset for synchronization) before the start position of PF0. The base station may send the LPWUS in on-duration before or after a second position, to wake up UE2. For example, the second position may be a position at 600 ms+20 ms (20 ms may be an offset for synchronization) before the start position of PF0. The base station may send the LPWUS in on-duration before or after a third position, to wake up UE3. For example, the third position may be a position at 400 ms+20 ms (20 ms may be an offset for synchronization) before the start position of PF0. The base station may send the LPWUS in on-duration before or after a fourth position, to wake up UE4. For example, the fourth position may be a position at 200 ms+20 ms (20 ms may be an offset for synchronization) before the start position of PF0. In this way, terminal devices with different MR starting duration may be woken up at different positions, thereby avoiding a problem of a power consumption waste caused when a terminal device with relatively short MR starting duration starts an MR.

In this embodiment of this application, the first position, the second position, the third position, and the fourth position may be start points of a time period (time period). The base station may continuously send the LPWUS in the time period, and the UE may continuously receive the LPWUS in the time period, to wake up an MR of the UE. Alternatively, the base station may start a timer at a start point of a time period, and continuously send the LPWUS during running of the timer, to wake up the UE. The time period or timing duration of the timer may be one or more symbols (symbol) or slots (slot). This is not specifically limited in this application.

In some other embodiments, for different terminal devices that monitor a same PF/PO, a base station may deliver an LPWUS at a time domain position before the PF/PO based on longest MR starting duration supported by the base station, to simultaneously wake up different UEs.

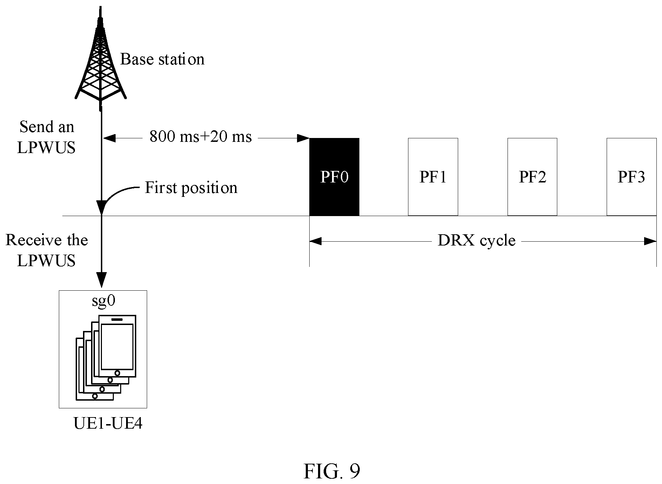

For example, as shown in FIG. 9, it is assumed that UE1, UE2, UE3, and UE4 all are allocated to PF0, and UE1-UE4 belong to a same subgroup (for example, sg0). MR starting duration of UE1 is 800 ms, MR starting duration of UE2 is 400 ms, MR starting duration of UE3 is 200 ms, and MR starting duration of UE4 is 100 ms. Longest MR starting duration supported by the base station is 800 ms. The base station may send the LPWUS in on-duration before or after a first position. For example, the first position may be a position at 800 ms+20 ms (20 ms may be an offset for synchronization) before the start position of PF0. All UEs allocated to PF0 monitor the LPWUS in on-duration before or after a time domain position at 800 ms. In this way, the base station does not need to send a plurality of LPWUSs to wake up different UEs separately, thereby reducing network resource overheads.

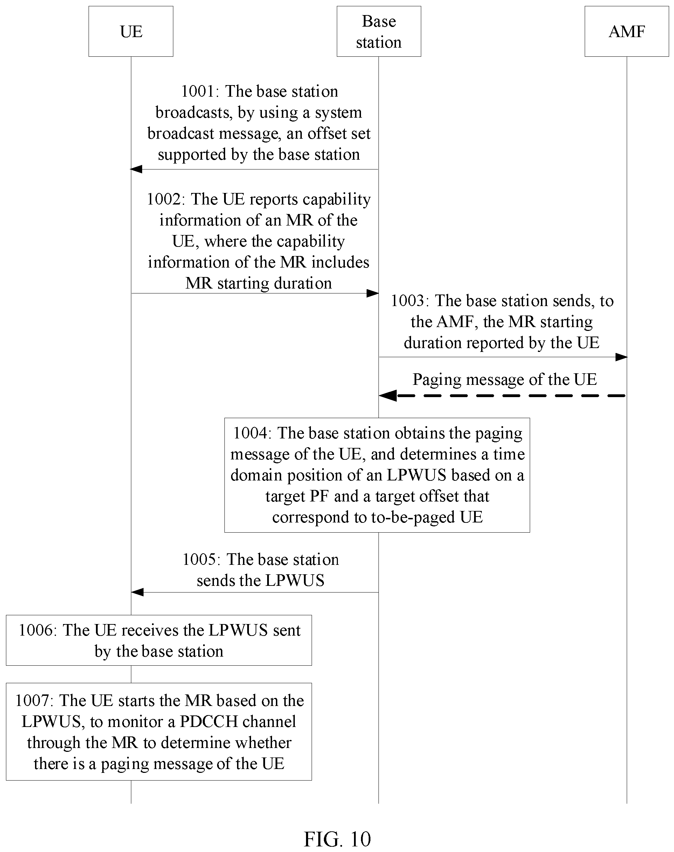

In still some other embodiments, for different terminal devices that monitor a same PF/PO, a base station may wake up different UEs in batches. As shown in FIG. 10, an embodiment of this application provides an LPWUS transmission method. An example in which a terminal device is UE and a network device is a base station is used for description. The method includes the following steps.

1001: The base station broadcasts, by using a system broadcast message, an offset set supported by the base station.

The offset set supported by the base station may include N first offsets. N is an integer greater than or equal to 1.

In this embodiment of this application, an offset may be an offset value, or an offset may indicate or be used to calculate an offset value. For example, the first offset may be a specific offset value, for example, 100 ms (or 200 slots), or 200 ms (or 400 slots). Alternatively, the first offset may indicate an offset value. For example, the first offset may be p0 or p1, p0 is used to indicate 100 ms (or 200 slots), and p1 is used to indicate 200 ms (or 400 slots).

In some embodiments, the first offset is related to MR starting duration of the UE. For example, the base station may configure the N first offsets based on a capability (for example, a bandwidth capability) of the base station and/or statistical data of the MR starting duration. Values of the N first offsets may be different, or may be the same. A person skilled in the art may understand that specific configurations of the N first offsets may be determined by the base station, or may be determined by another network device. This is not limited in this application.

The statistical data (which may also be referred to as historical data) of the MR starting duration includes MR starting duration of a plurality of UEs that have camped on the base station previously. The base station may obtain, from an AMF, the MR starting duration of the plurality of UEs that have camped on the base station.

For example, if the plurality of UEs that have camped on the base station include UE1, UE2, UE3, and UE4, MR starting duration of UE1 is 800 ms, MR starting duration of UE2 is 400 ms, MR starting duration of UE3 is 200 ms, and MR starting duration of UE4 is 100 ms, the statistical data of the MR starting duration may include {800 ms, 400 ms, 200 ms, 100 ms}. The base station may configure one (that is, N=1) first offset based on the statistical data of the MR starting duration, for example, 800 ms. Alternatively, the base station may configure two (that is, N=2) first offsets based on the statistical data of the MR starting duration, for example, 800 ms and 400 ms. Alternatively, the base station may configure four (that is, N=4) first offsets based on the statistical data of the MR starting duration, for example, 800 ms, 400 ms, 200 ms, and 100 ms.

Optionally, the offset set supported by the base station may further include a second offset. The second offset is related to downlink synchronization duration. For example, the second offset may be 20 ms. The second offset and the first offset may jointly indicate an offset between a time domain position (a monitoring position or a sending position) of an LPWUS and a time domain position of a target PF.

In some other embodiments, the first offset is related to MR starting duration of the UE and a second offset. The second offset is related to downlink synchronization duration. The first offset may indicate an offset between a time domain position (a monitoring position or a sending position) of an LPWUS and a time domain position of a target PF.

For example, the base station may configure the N first offsets based on statistical data of the MR starting duration and the second offset. Values of the N first offsets may be different. It is assumed that the statistical data of the MR starting duration includes {800 ms, 400 ms, 200 ms, 100 ms}, and the second offset is 20 ms. The base station may configure two (that is, N=2) first offsets based on the statistical data of the MR starting duration and the second offset, for example, 800 ms+20 ms (namely, 820 ms) and 400 ms+20 ms (namely, 420 ms). Alternatively, the base station may configure four (that is, N=4) first offsets based on the statistical data of the MR starting duration, for example, 800 ms+20 ms (namely, 820 ms), 400 ms+20 ms (namely, 420 ms), 200 ms+20 ms (namely, 220 ms), and 100 ms+20 ms (namely, 120 ms).

When the base station configures one first offset, that is, when N=1, the base station may send the LPWUS to the UE based on the unique first offset, to wake up an MR of the UE.

When the base station configures a plurality of first offsets, the base station may separately send the LPWUS to different UEs based on the plurality of first offsets, to wake up MRs of the different UEs. For example, when N=2, the base station may send the LPWUS to different UEs based on two first offsets, to wake up MRs of the different UEs.

The offset set supported by the base station may be carried in the system broadcast message. The system broadcast message may be, for example, SIB1 or SIB2. This is not specifically limited in this application.

The following is a possible format of the system broadcast message:

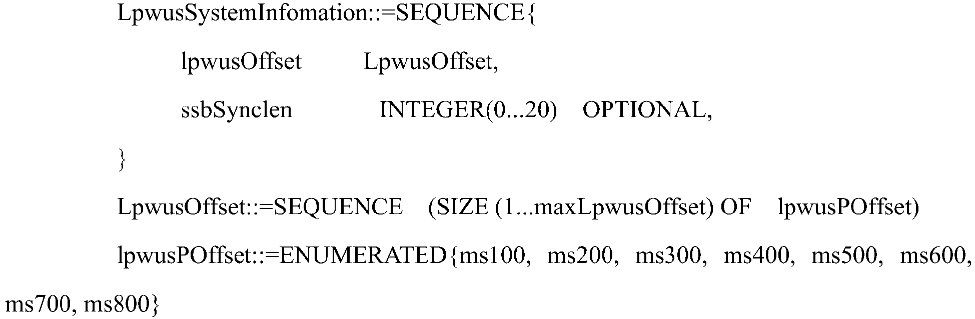

LpwusOffset indicates the first offset, and the first offset is related to the MR starting duration of the UE. For example, the first offset may be greater than or equal to the MR starting duration of the UE.

A data type of the first offset may be an enumeration type. For example, the first offset may include N enumerated values (a minimum quantity is 1 and a maximum quantity is a quantity indicated by maxLpwusOffset). For example, the first offset may include one or more of ms100, ms200, ms300, ms400, ms500, ms600, ms700, and ms800.

Alternatively, a data type of the first offset may be an integer type. For example, LpwusPOffset may alternatively be defined as LpwusPOffset::=INTEGER(0...1000), and a unit is ms.
ssbSynclen indicates the second offset. The second offset is related to the downlink synchronization duration. For example, the second offset may be 0-20 ms.

The following is another possible format of the system broadcast message:

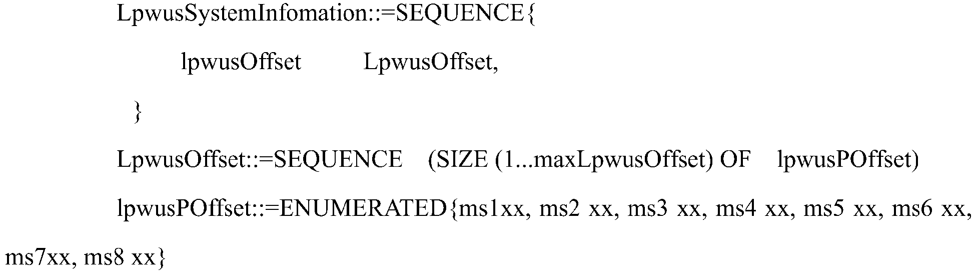

LpwusOffset indicates the first offset, and the first offset is related to the MR starting duration of the UE and the second offset. For example, the first offset may be greater than or equal to a sum of the MR starting duration of the UE and the second offset.

A data type of the first offset may be an enumeration type. The first offset may include one or more of ms1xx (for example, 120), ms2xx (for example, 220), ms3xx (for example, 320), ms4xx (for example, 420), ms5xx (for example, 520), ms6xx (for example, 620), ms7xx (for example, 720), and ms8xx (for example, 820).

Alternatively, a data type of the first offset may be an integer type. For example, LpwusPOffset may alternatively be defined as LpwusPOffset::=INTEGER(0...1000), and a unit is ms.

Optionally, LpwusPOffset in the system broadcast message may alternatively be defined as follows:

```
  LpwusSystemInfomation::=SEQUENCE{
             lpwusPOffset LpwusPOffset1,
             lpwusPOffset LpwusPOffset2,
             lpwusPOffset LpwusPOffset3,
             ...
         }
```

In some embodiments, the broadcast message may include a preset array, and the preset array is used to indicate the N first offsets.

In some other embodiments, the broadcast message may include a plurality of bits, and the plurality of bits correspond to a plurality of different preset offsets. If a bit in the plurality of bits is 0, it indicates that a corresponding preset offset is not supported; or if a bit in the plurality of bits is 1, it indicates that a corresponding preset offset is supported. The N first offsets include a preset offset corresponding to a bit whose value is 1 in the plurality of bits.

In some embodiments, the N first offsets may be determined based on a plurality of preset offsets. The preset offset can be of an integer type or an enumeration type. The preset offset may be determined based on the MR starting duration of the UE, or the preset offset may be determined based on the MR starting duration of the UE and the second offset.

1002: The UE reports capability information of the MR of the UE, where the capability information of the MR includes the MR starting duration.

The MR starting duration of the UE may be total duration required for waking up the MR of the UE.

It should be noted that each UE in a coverage area of the base station may report the MR starting duration of the UE to the base station. A process in which each UE reports the MR starting duration of the UE is as follows:
After being powered on, the UE may report the MR starting duration of the UE to a base station corresponding to a cell on which the UE camps.

In some embodiments, a plurality of pieces of MR starting duration information may be predefined, and the MR starting duration information may be represented as an enumerated type or an integer type. For example, the MR starting duration information is of an enumeration type, and a predefined enumerated value (which may also be referred to as an enumeration element) may include {800 ms, 700 ms, 600 ms, 500 ms, 400 ms, 300 ms, 200 ms, 100 ms}. The UE may determine actual MR starting duration of the UE based on a capability of the UE, select a target enumerated value from a plurality of predefined enumerated values of the MR starting duration based on the actual MR starting duration of the UE, and report the target enumerated value to the base station.

Optionally, the target enumerated value may be an enumerated value greater than or equal to the actual MR starting duration of the UE in the plurality of predefined enumerated values of the MR starting duration.

For example, it is assumed that the predefined enumerated values include {800 ms, 700 ms, 600 ms, 500 ms, 400 ms, 300 ms, 200 ms, 100 ms}. If the actual MR starting duration of the UE is 589 ms, the target enumerated value may be 600 ms, 700 ms, or 800 ms.

Optionally, the target enumerated value may be an enumerated value closest to the actual MR starting duration of the UE in at least one enumerated value greater than or equal to the actual MR starting duration of the UE in the plurality of predefined enumerated values of the MR starting duration.

For example, it is assumed that the predefined enumerated values include {800 ms, 700 ms, 600 ms, 500 ms, 400 ms, 300 ms, 200 ms, 100 ms}. If the actual MR starting duration of the UE is 589 ms, enumerated values greater than or equal to the actual MR starting duration of the UE may include 600 ms, 700 ms, and 800 ms. 600 ms is an enumerated value closest to the actual MR starting duration of the UE. In other words, the target enumerated value may be 600 ms.

In some other embodiments, the UE may directly report the actual MR starting duration of the UE to the base station. For example, if the actual MR starting duration of the UE is 589 ms, the UE may report the actual MR starting duration (589 ms) to the base station.

1003: The base station sends, to the AMF, the MR starting duration reported by the UE.

The base station may receive the MR starting duration reported by the UE (each UE in the coverage area of the base station). When the base station initiates an RRC connection release procedure to transition the UE in an RRC connected state to an RRC idle state, the base station may send, to the AMF, the MR starting duration (for example, the target enumerated value or the actual MR starting duration of the UE) reported by the UE. Then, the base station may delete the MR starting duration reported by the UE. In other words, the base station does not store the MR starting duration of the UE, to save storage space. It may be understood that the base station may alternatively not delete the MR starting duration reported by the UE.

After receiving, from the base station, the MR starting duration reported by the UE (each UE in the coverage area of the base station), the AMF may store the MR starting duration of the UE. It may be understood that the AMF may receive, from the base station, MR starting duration reported by a plurality of UEs, and store the MR starting duration of the plurality of UEs. It may be understood that the MR starting duration of the plurality of UEs may alternatively be stored in another device. This is not limited in this embodiment of this application.

1004: The base station obtains a paging message of the UE, and determines the time domain position of the LPWUS based on a target PF and a target offset that correspond to to-be-paged UE.

The base station may obtain the paging message of the UE in the following two manners:
Manner 1: The base station receives the paging message of the UE from the AMF. When a core network needs to send data or signaling to the terminal device, the core network may send the paging message of the UE to the base station through the AMF, and the base station may send the paging message to the terminal device to page the terminal device. The AMF may further send MR starting duration of the to-be-paged UE to the base station.
Manner 2: The base station generates the paging message of the UE. For example, after cell system information changes, or when the base station needs to notify the terminal device to receive information such as an earthquake, an earthquake and tsunami warning system, or a commercial mobile alert service, the base station may send the paging message to the terminal device to page the terminal device. The base station may further obtain MR starting duration of the to-be-paged UE. For example, the base station may obtain the MR starting duration of the to-be-paged UE from a UE context.

After obtaining the paging message of the UE, the base station may first calculate the target PF corresponding to the to-be-paged UE. A frame number of the target PF satisfies Formula (1). For Formula (1), refer to related descriptions of the foregoing related concepts or technologies. Details are not described herein again.

Then, the base station may determine the time domain position of the LPWUS based on the target PF and the target offset that correspond to the to-be-paged UE (for example, UE1). The time domain position of the LPWUS may be a moment or a time point. For example, the time domain position of the LPWUS may be a time domain position (a moment or a time point) that is the target offset (or the target offset and the second offset) ahead of the start position (a start moment) of the target PF. In this embodiment of this application, the time domain position of the LPWUS may be a start point of a time period. The base station may continuously send the LPWUS in the time period, and the UE may continuously receive the LPWUS in the time period, to wake up the MR of the UE. Alternatively, the base station may start a timer at the time domain position (namely, a start point of a time period) of the LPWUS, and continuously send the LPWUS during running of the timer, to wake up the MR of the UE. The UE may start a timer at the time domain position (namely, the start point of the time period) of the LPWUS, and continuously receive the LPWUS during running of the timer, to wake up the MR of the UE. The time period or timing duration of the timer may be one or more symbols or slots. This is not specifically limited in this application.

In some embodiments, the target offset corresponding to the UE is a first offset greater than or equal to the MR starting duration of the UE in the N first offsets. For example, it is assumed that N=2, that is, the base station configures two first offsets, which are 800 ms and 400 ms. If the MR starting duration reported by the UE is 600 ms, the target offset corresponding to the UE may be 800 ms. Alternatively, the target offset corresponding to the UE is a first offset greater than or equal to the MR starting duration of the UE and the second offset in the N first offsets. For example, it is assumed that N=2, that is, the base station configures two first offsets, which are 820 ms and 420 ms. If the MR starting duration reported by the UE is 600 ms and the second offset is 20 ms, the target offset corresponding to the UE may be 820 ms.

In some embodiments, the target offset corresponding to the UE is a smallest first offset in M first offsets, or the target offset corresponding to the UE is a first offset closest to the MR starting duration reported by the UE in the M first offsets. The M first offsets belong to the N first offsets. Each of the M first offsets is greater than or equal to the MR starting duration of the UE. M is less than or equal to N, and M is an integer greater than or equal to 2. For example, it is assumed that N=2, that is, the base station configures two first offsets, which are 800 ms and 400 ms, and the MR starting duration reported by the UE is 200 ms. There may be two (that is, M=N=2) first offsets greater than or equal to the MR starting duration reported by the UE, which are 800 ms and 400 ms. 400 ms is the first offset closest to the MR starting duration reported by the UE. In other words, the target offset corresponding to the UE may be 400 ms. Alternatively, each of the M first offsets is greater than or equal to the sum of the MR starting duration of the UE and the second offset. For example, it is assumed that N=2, that is, the base station configures two first offsets, which are 820 ms and 420 ms, the MR starting duration of the UE is 200 ms, and the second offset is 20 ms. In this case, there may be two (that is, M=N=2) first offsets greater than or equal to the sum of the MR starting duration of the UE and the second offset, which are 820 ms and 420 ms. 420 ms is the first offset closest to the MR starting duration reported by the UE. In other words, the target offset may be 420 ms.

In some embodiments, the target offset corresponding to the UE is greater than or equal to the MR starting duration of the UE. In this case, because the target offset does not include the second offset, the base station may determine the time domain position of the LPWUS based on the target PF, the target offset, and the second offset that correspond to the to-be-paged UE.

In some embodiments, the target offset corresponding to the UE is greater than or equal to the sum of the MR starting duration of the UE and the second offset. In this case, because the target offset includes the second offset, the base station may determine the time domain position of the LPWUS based on the target PF and the target offset that correspond to the to-be-paged UE.

1005: The base station sends the LPWUS.

For a PF/PO in which there is to-be-paged UE, the base station may send the LPWUS in on-duration (on duration) before or after a time domain position of the LPWUS (namely, the time domain position, of the LPWUS, determined in the foregoing step (step 1004)) that corresponds to the PF/PO, to wake up the MR of the to-be-paged UE.

Duration of the LPWUS may be one or more symbols or slots. This is not specifically limited in this application.

1006: The UE receives the LPWUS sent by the base station.

The UE may determine, based on Formula (1), the target PF corresponding to the UE. The UE may determine the time domain position of the LPWUS based on the target PF and the target offset that correspond to the UE. In this way, the UE may align the time domain position of the LPWUS with the base station, so that when the base station sends the LPWUS in the on-duration before or after the time domain position of the LPWUS, the UE can receive the LPWUS in the on-duration before or after the time domain position of the LPWUS.

In this embodiment of this application, the UE may monitor the LPWUS through an LR. The LR of the UE may always be in an operating state (non-sleep state), or the LR of the UE may be in an operating state (non-sleep state) within a preset time period based on a preset rule. This is not specifically limited in this application.

The following describes, by using an example in which the base station configures two first offsets and the target PF corresponding to the to-be-paged UE is PF0, how the base station sends the LPWUS and how the UE monitors the LPWUS.

It is assumed that to-be-paged UEs include UE1 and UE2, UE1 and UE2 monitor a same PF (for example, PF0). When the base station configures two first offsets (that is, a quantity N of first offsets configured by the base station is 2), a target offset corresponding to UE1 may be a first offset greater than or equal to MR starting duration of UE1 in the two first offsets; or a target offset corresponding to UE1 may be a first offset greater than or equal to MR starting duration of UE1 and the second offset in the two first offsets. A target offset corresponding to UE2 may be a first offset greater than or equal to MR starting duration of UE2 in the two first offsets; or a target offset corresponding to UE2 may be a first offset greater than or equal to MR starting duration of UE2 and the second offset in the two first offsets. If the target offsets corresponding to UE1 and UE2 are different, the base station may send LPWUSs at different time domain positions to wake up an MR of UE1 and an MR of UE2 separately. In this way, a problem of a power consumption waste caused by starting the MR in advance by UE with relatively short MR starting duration can be avoided.

In a possible example, the two first offsets configured by the base station are related to the MR starting duration of the UE and the second offset. The target offset corresponding to the UE is greater than or equal to the sum of the MR starting duration of the UE and the second offset. In this case, because the target offset includes the second offset, the base station may determine the time domain position of the LPWUS based on the target PF and the target offset that correspond to the to-be-paged UE.

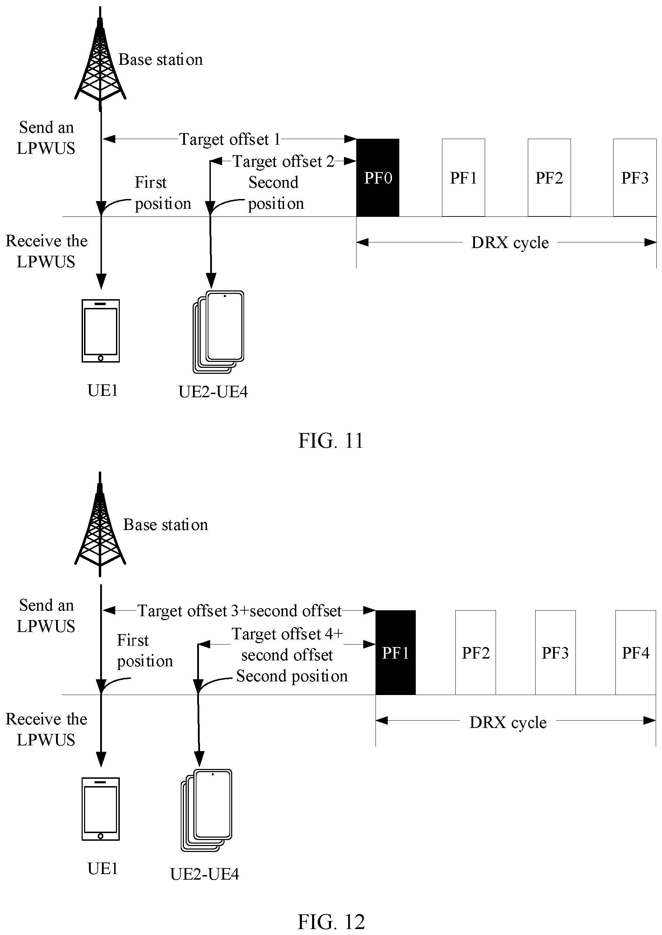

As shown in FIG. 11, the base station may send the LPWUS (first LPWUS) in the on-duration before or after the first position, to wake up the MR of UE1. The base station may send the LPWUS (second LPWUS) in on-duration before or after a second position, to wake up the MR of UE2. The first position may be determined by the base station based on a target PF (PF0) and a target offset (target offset 1) that correspond to UE1. For example, the first position may be a time domain position that is the target offset 1 (for example, 820 ms) ahead of a start position of PF0. The second position may be determined by the base station based on a target PF (PF0) and a target offset (target offset 2) that correspond to UE2. For example, the second position may be a time domain position that is the target offset 2 (for example, 420 ms) ahead of a start position of PF0.

In another possible example, the two first offsets configured by the base station are related to the MR starting duration of the UE. The target offset corresponding to the UE is greater than or equal to the MR starting duration of the UE. In this case, because the target offset does not include the second offset, the base station may determine the time domain position of the LPWUS based on the target PF, the target offset, and the second offset that correspond to the to-be-paged UE.

As shown in FIG. 12, the base station may send the LPWUS (first LPWUS) in the on-duration before or after the first position, to wake up the MR of UE1. The base station may send the LPWUS (second LPWUS) in on-duration before or after the second position, to wake up the MR of UE2. The first position may be determined by the base station based on a target PF (PF0) and a target offset (target offset 3) that correspond to UE1, and the second offset. For example, the first position may be a time domain position that is the target offset (for example, 800 ms) and the second offset (for example, 20 ms) ahead of a start position of PF0. The second position may be determined by the base station based on a target PF (PF0) and a target offset (target offset 4) that correspond to UE2, and the second offset. For example, the second position may be a time domain position that is the target offset 4 (for example, 400 ms) and the second offset (for example, 20 ms) ahead of a start position of PF0.

It may be understood that UEs that monitor PF0 not only include the to-be-paged UEs (for example, UE1 and UE2), but also may include a plurality of other UEs. For example, the UEs that monitor PF0 may further include UE3 and UE4. UE1-UE4 each may monitor the LPWUS to determine whether to wake up an MR. It is assumed that the MR starting duration corresponding to UE1 is 800 ms, the MR starting duration corresponding to UE2 is 400 ms, MR starting duration corresponding to UE3 is 200 ms, and MR starting duration corresponding to UE4 is 100 ms. The following describes how UE1-UE4 monitor the LPWUS.

In a possible example, the target offset corresponding to the UE is greater than or equal to the sum of the MR starting duration of the UE and the second offset. In this case, because the target offset includes the second offset, the UE may determine the time domain position of the LPWUS based on the target PF and the target offset.

When the base station configures two first offsets (for example, 820 ms and 420 ms), a target offset (target offset 1) corresponding to UE1 may be 820 ms, and target offsets (target offset 2) corresponding to UE2-UE4 are the same and may be 420 ms.

As shown in FIG. 11, UE1 may monitor a first LPWUS in the on-duration before or after the first position. UE2-UE4 may monitor a second LPWUS in on-duration before or after a second position. The first position may be determined by UE1 based on a target PF (PF0) and a target offset (the target offset 1) that correspond to UE1. For example, the first position may be a time domain position that is the target offset 1 (for example, 820 ms) ahead of a start position of PF0. The second position may be determined by UE2-UE4 based on target PFs (PF0) and target offsets that correspond to UE2-UE4 (the target offsets respectively corresponding to UE2-UE4 are the same, for example, are a target offset 2). For example, the second position may be a time domain position that is the target offset 2 (for example, 420 ms) ahead of a start position of PF0.

In another possible example, the target offset corresponding to the UE is greater than or equal to the MR starting duration of the UE. In this case, because the target offset does not include the second offset, the UE may determine the time domain position of the LPWUS based on the target PF, the target offset, and the second offset that correspond to the to-be-paged UE.

When the base station configures two first offsets (for example, 800 ms and 400 ms), a target offset (target offset 3) corresponding to UE1 may be 800 ms, and target offsets (target offset 4) corresponding to UE2-UE4 are the same and may be 400 ms.

As shown in FIG. 12, UE1 may monitor a first LPWUS in the on-duration before or after the first position. UE2-UE4 may monitor a second LPWUS in on-duration before or after a second position. The first position may be determined by UE1 based on a target PF (PF0) and a target offset (target offset 3) that correspond to UE1, and the second offset. For example, the first position may be a time domain position that is the target offset (for example, 800 ms) and the second offset (for example, 20 ms) ahead of a start position of PF0. The second position may be separately determined by UE2-UE4 based on target PFs (PF0) and target offsets that correspond to UE2-UE4 (the target offsets respectively corresponding to UE2-UE4 are the same, for example, are a target offset 4), and the second offset. For example, the second position may be a time domain position that is the target offset 4 (for example, 400 ms) and the second offset (for example, 20 ms) ahead of a start position of PF0.

In some embodiments, if the MR starting duration indicated by the capability information of the MR of the UE is greater than any one of the N first offsets broadcast by the base station, the UE does not use an LPWUS function to receive the LPWUS from the network device. The UE may use an original paging monitoring mechanism and always start the MR to monitor the paging message of the terminal device. In this way, a problem that the paging message is missed because the UE does not start the MR in a timely manner can be avoided, and the paging delay can be reduced.

In addition, the base station may not send the LPWUS for a PF (for example, PF2) in which there is no to-be-paged UE. In this way, each UE that monitors PF2 in the coverage area of the base station does not receive the LPWUS in on-duration before or after a time domain position, of the LPWUS, corresponding to PF2, and may not start the MR to receive the paging message, thereby reducing power consumption. For a manner in which the UE determines the time domain position, of the LPWUS, corresponding to PF2, refer to a manner in which the UE determines the time domain position, of the LPWUS, corresponding to PF0. Details are not described herein again.

1007: The UE starts the MR based on the LPWUS, to monitor a PDCCH channel through the MR to determine whether there is a paging message of the UE.

A payload of the LPWUS may be used to indicate an identifier ID (UE ID) of a to-be-paged terminal device, or used to indicate one or more POs of the target PF and a subgroup corresponding to each PO. The LPWUS may be used to wake up the to-be-paged terminal device, or the LPWUS is used to wake up the one or more POs of the target PF and a terminal device in the subgroup corresponding to each PO.

After receiving the LPWUS, the UE can parse the payload of the LPWUS. The UE determines whether an identifier of the UE is the same as the UE ID indicated by the payload of the LPWUS, or the UE determines whether the UE belongs to the subgroup indicated by the payload of the LPWUS.

If the UE determines that the identifier of the UE is the same as the UE ID indicated by the payload of the LPWUS, or the UE belongs to the subgroup indicated by the payload of the LPWUS, the UE may start the MR, and monitor the PDCCH channel on a target PO through the MR, to determine whether there is a paging message of the UE. Otherwise, the UE does not start the MR, to save power consumption.

Based on the method provided in this embodiment of this application, the base station may broadcast the N first offsets, and the base station may select a target offset from the N first offsets based on the MR starting duration reported by the terminal device. The base station determines the time domain position of the LPWUS based on the target offset and the target PF (a PF in which the terminal device monitors the paging message) that correspond to the terminal device, and sends the LPWUS in the on-duration before or after the time domain position of the LPWUS, to wake up the terminal device. The terminal device may select a target offset from the N first offsets based on the MR starting duration supported by the terminal device, and then determine the time domain position of the LPWUS based on the target offset and the target PF that correspond to the terminal device, so that the LPWUS sent by the base station is monitored in the on-duration before or after the time domain position of the LPWUS. A plurality of UEs with same or similar MR starting duration may correspond to a same first offset (target offset). In other words, the base station may wake up, by using one LPWUS, MRs of the plurality of UEs corresponding to the same first offset. According to the method provided in this embodiment of this application, a problem of a power consumption waste caused by starting the MR in advance by the UE can be avoided, and a paging delay can be reduced. In addition, the base station does not need to send LPWUSs at different time domain positions based on actual MR starting duration of each UE to wake up an MR of the corresponding UE, which reduces network resource overheads. The method provided in this embodiment of this application can achieve a balance between reducing power consumption, reducing the paging delay, and reducing network resource overheads.

In addition, in this embodiment of this application, the PF is used as an example to describe the time domain position of the LPWUS, and the PF may also be replaced with a PO. For example, the base station may determine, based on a target PO (a PO on which UE1 monitors the paging message) and the target offset that correspond to the to-be-paged UE (for example, UE1), a time domain position for sending the LPWUS (an LPWUS used to wake up UE1). For example, the time domain position of the LPWUS may be a time domain position that is the target offset and the second offset ahead of the start position of the target PO. The UE may determine, based on the target PO (the PO on which UE1 monitors the paging message) and the target offset that correspond to the UE, the time domain position for sending the LPWUS (the LPWUS used to wake up UE1). For example, the time domain position of the LPWUS may be the time domain position that is the target offset and the second offset ahead of the start position of the target PO.

In yet some other embodiments, in one DRX cycle, a base station may allocate UEs with same or similar MR starting duration to a same PF/PO, and wake up UEs in one PF/PO by using one LPWUS.

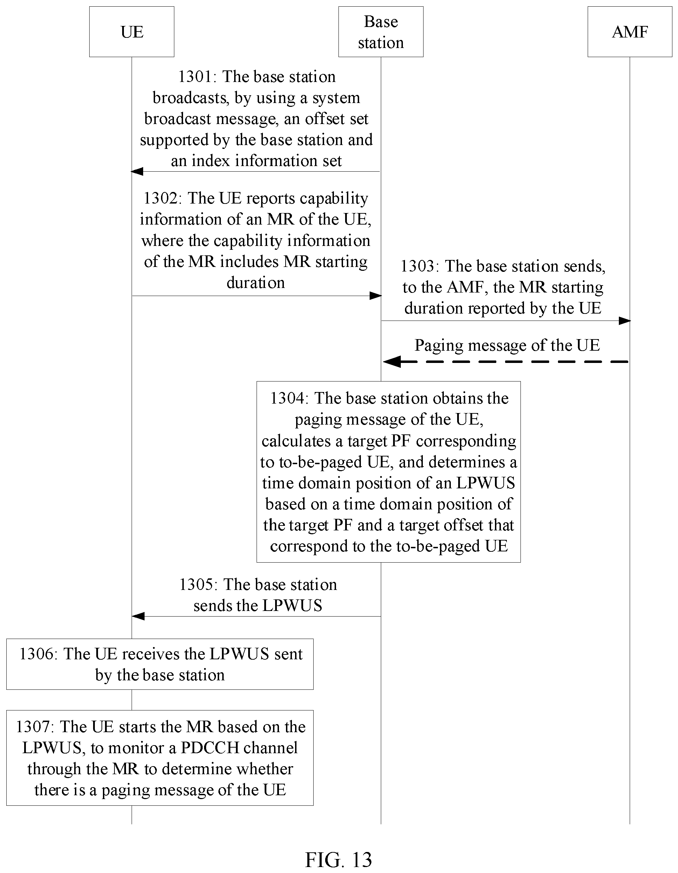

As shown in FIG. 13, an embodiment of this application provides an LPWUS transmission method. An example in which a terminal device is UE and a network device is a base station is used for description. The method includes the following steps.

1301: The base station broadcasts, by using a system broadcast message, an offset set and an index information set that are supported by the base station.

The system broadcast message includes the offset set and the index information set that are supported by the base station.

The offset set supported by the base station may include N first offsets. For the offset set supported by the base station, refer to related descriptions in step 1001. Details are not described herein again.

The index information set may include N pieces of index information (index). Each of the N first offsets corresponds to one of the N pieces of index information. Index information corresponding to each first offset is used to indicate a position of a PF. The position of the PF may be a position of a PF in one DRX cycle. The PF may be a PF used by the UE to monitor a paging message. A total quantity of PFs corresponding to the N pieces of index information is less than or equal to a quantity of PFs in one DRX cycle.

Optionally, the system broadcast message further includes a plurality of pieces of predefined MR starting duration information. Each of the plurality of pieces of predefined MR starting duration information corresponds to one piece of index information in the index information set.

The base station may allocate UEs with same or similar MR starting duration to a same PF/PO based on the index information.

For example, when the quantity of PFs in the DRX cycle is greater than or equal to 8, content indicated by information carried in the system broadcast message may be shown in Table 1.

**Table 1**

| A quantity of PFs in a DRX cycle is 8 | | | | | | | | |
|---|---|---|---|---|---|---|---|---|
| MR starting duration | 100 ms | 200 ms | 300 ms | 400 ms | 500 ms | 600 ms | 700 ms | 800 ms |
| index | 0 | 1 | 2 | 3 | 4 | 5 | 6 | 7 |
| First offset | 100 ms | 200 ms | 300 ms | 400 ms | 500 ms | 600 ms | 700 ms | 800 ms |

In Table 1, a plurality of segments of MR starting duration, for example, eight segments of MR starting duration, may be predefined, including {100 ms, 200 ms, 300 ms, 400 ms, 500 ms, 600 ms, 700 ms, 800 ms}. The offset set supported by the base station may include eight (that is, N=8) first offsets, and the index information set may include eight (that is, N=8) pieces of index information. The eight first offsets in the offset set include {100 ms, 200 ms, 300 ms, 400 ms, 500 ms, 600 ms, 700 ms, 800 ms}, and each of the eight first offsets may be related to the MR starting duration. The eight pieces of index information in the index information set may include {0, 1, 2, 3, 4, 5, 6, 7}.

In Table 1, each of the eight segments of MR starting duration corresponds to one piece of index information. For example, when MR starting duration is 100 ms, index information corresponding to the MR starting duration is 0; when MR starting duration of UE is 100 ms, a PF corresponding to the UE may be PF0; when MR starting duration is 200 ms, index information corresponding to the MR starting duration is 1; when MR starting duration of UE is 200 ms, a PF corresponding to the UE may be PF1; when MR starting duration is 300 ms, index information corresponding to the MR starting duration is 2; when MR starting duration of UE is 300 ms, a PF corresponding to the UE may be PF2; when MR starting duration is 400 ms, index information corresponding to the MR starting duration is 3; when MR starting duration of UE is 400 ms, a PF corresponding to the UE may be PF3; when MR starting duration is 500 ms, index information corresponding to the MR starting duration is 4; when MR starting duration of UE is 500 ms, a PF corresponding to the UE may be PF4; when MR starting duration is 600 ms, index information corresponding to the MR starting duration is 5; when MR starting duration of UE is 600 ms, a PF corresponding to the UE may be PF5; when MR starting duration is 700 ms, index information corresponding to the MR starting duration is 6; when MR starting duration of UE is 700 ms, a PF corresponding to the UE may be PF6; when MR starting duration is 800 ms, index information corresponding to the MR starting duration is 7; and when MR starting duration of UE is 800 ms, a PF corresponding to the UE may be PF7.

In Table 1, each of the eight pieces of index information corresponds to one first offset. For example, when index information is 0, a first offset corresponding to the index information is 100 ms; when index information is 1, a first offset corresponding to the index information is 200 ms; when index information is 2, a first offset corresponding to the index information is 300 ms; when index information is 3, a first offset corresponding to the index information is 400 ms; when index information is 4, a first offset corresponding to the index information is 500 ms; when index information is 5, a first offset corresponding to the index information is 600 ms; when index information is 6, a first offset corresponding to the index information is 700 ms; and when index information is 7, a first offset corresponding to the index information is 800 ms.

The eight first offsets in Table 1 are described by using an example in which the first offset is related to the MR starting duration.

If eight first offsets are related to MR starting duration and a second offset, content indicated by information carried in the system broadcast message may be shown in Table 2.

**Table 2**

| A quantity of PFs in a DRX cycle is 8 | | | | | | | | |
|---|---|---|---|---|---|---|---|---|
| MR starting duration | 100 ms | 200 ms | 300 ms | 400 ms | 500 ms | 600 ms | 700 ms | 800 ms |
| index | 0 | 1 | 2 | 3 | 4 | 5 | 6 | 7 |
| First offset | 120 ms | 220 ms | 320 ms | 420 ms | 520 ms | 620 ms | 720 ms | 820 ms |

In Table 2, the eight first offsets may be determined based on the MR starting duration and the second offset (for example, 20 ms). The eight first offsets in the offset set include {120 ms, 220 ms, 320 ms, 420 ms, 520 ms, 620 ms, 720 ms, 820 ms}.

When index information is 0, a first offset corresponding to the index information is 120 ms (that is, 100 ms+20 ms); when index information is 1, a first offset corresponding to the index information is 220 ms (that is, 200 ms+20 ms); when index information is 2, a first offset corresponding to the index information is 320 ms (that is, 300 ms+20 ms); when index information is 3, a first offset corresponding to the index information is 420 ms (that is, 400 ms+20 ms); when index information is 4, a first offset corresponding to the index information is 520 ms (that is, 500 ms+20 ms); when index information is 5, a first offset corresponding to the index information is 620 ms (that is, 600 ms+20 ms); when index information is 6, a first offset corresponding to the index information is 720 ms (that is, 700 ms+20 ms); and when index information is 7, a first offset corresponding to the index information is 820 ms (that is, 800 ms+20 ms). For the remaining part of Table 2, refer to related descriptions in Table 1. Details are not described herein again.

For example, when the quantity of PFs in the DRX cycle is greater than or equal to 4, content indicated by information carried in the system broadcast message may be shown in Table 3.

**Table 3**

| A quantity of PFs in a DRX cycle is 4 | | | | | | | | |
|---|---|---|---|---|---|---|---|---|
| MR starting duration | 100 ms | 200 ms | 300 ms | 400 ms | 500 ms | 600 ms | 700 ms | 800 ms |
| index | 0 | | 1 | | 2 | | 3 | |
| First offset | 200 ms/220 ms | | 400 ms/420 ms | | 600 ms/620 ms | | 800 ms/820 ms | |

In Table 3, a plurality of segments of MR starting duration, for example, eight segments of MR starting duration, may be predefined, including {100 ms, 200 ms, 300 ms, 400 ms, 500 ms, 600 ms, 700 ms, 800 ms}. The index information set may include N (for example, four) pieces of index information, including: {0, 1, 2, 3}.

In Table 3, each of the eight segments of MR starting duration corresponds to one piece of index information. For example, when MR starting duration is 100 ms, index information corresponding to the MR starting duration is 0; when MR starting duration of UE is 100 ms, a PF corresponding to the UE may be PF0; when MR starting duration is 200 ms, index information corresponding to the MR starting duration is 0; when MR starting duration of UE is 200 ms, a PF corresponding to the UE may be PF0; when MR starting duration is 300 ms, index information corresponding to the MR starting duration is 1; when MR starting duration of UE is 300 ms, a PF corresponding to the UE may be PF1; when MR starting duration is 400 ms, index information corresponding to the MR starting duration is 1; when MR starting duration of UE is 400 ms, a PF corresponding to the UE may be PF1; when MR starting duration is 500 ms, index information corresponding to the MR starting duration is 2; when MR starting duration of UE is 500 ms, a PF corresponding to the UE may be PF2; when MR starting duration is 600 ms, index information corresponding to the MR starting duration is 2; when MR starting duration of UE is 600 ms, a PF corresponding to the UE may be PF2; when MR starting duration is 700 ms, index information corresponding to the MR starting duration is 3; when MR starting duration of UE is 700 ms, a PF corresponding to the UE may be PF3; when MR starting duration is 800 ms, index information corresponding to the MR starting duration is 3; and when MR starting duration of UE is 800 ms, a PF corresponding to the UE may be PF3.

Optionally, when two or more segments of predefined MR starting duration correspond to a same index value, the system broadcast message may carry only a larger segment of MR starting duration in the two or more segments of MR starting duration. For example, when MR starting duration is 100 ms, index information corresponding to the MR starting duration is 0; and when MR starting duration is 200 ms, index information corresponding to the MR starting duration is 0. In this case, the system broadcast message may carry only MR starting duration that is 200 ms.

In Table 3, the offset set supported by the base station may include N (for example, four) first offsets. When the four first offsets are related to the MR starting duration, the four first offsets in the offset set may include {200 ms, 400 ms, 600 ms, 800 ms}; or when the four first offsets are related to the MR starting duration and a second offset (for example, 20 ms), the four first offsets in the offset set include {220 ms, 420 ms, 620 ms, 820 ms}.

In Table 3, each of the four pieces of index information may correspond to one first offset. For example, when index information is 0, a first offset corresponding to the index information is 200 ms/220 ms; when index information is 1, a first offset corresponding to the index information is 400 ms/420 ms; when index information is 2, a first offset corresponding to the index information is 600 ms/620 ms; and when index information is 3, a first offset corresponding to the index information is 800 ms/820 ms.

For example, when the quantity of PFs in the DRX cycle is greater than or equal to 2, content indicated by information carried in the system broadcast message may be shown in Table 4.

**Table 4**

| A quantity of PFs in a DRX cycle is 2 | | | | | | | | |
|---|---|---|---|---|---|---|---|---|
| MR starting duration | 100 ms | 200 ms | 300 ms | 400 ms | 500 ms | 600 ms | 700 ms | 800 ms |
| index | 0 | | | | 1 | | | |
| First offset | 400 ms/420 ms | | | | 800 ms/820 ms | | | |

In Table 4, a plurality of segments of MR starting duration, for example, eight segments of MR starting duration, may be predefined, including {100 ms, 200 ms, 300 ms, 400 ms, 500 ms, 600 ms, 700 ms, 800 ms}. The index information set may include N (for example, two) pieces of index information, including: {0, 1}.

In Table 4, each of the eight segments of MR starting duration corresponds to one piece of index information. For example, when MR starting duration is 100 ms, index information corresponding to the MR starting duration is 0; when MR starting duration is 200 ms, index information corresponding to the MR starting duration is 0; when MR starting duration is 300 ms, index information corresponding to the MR starting duration is 0; when MR starting duration is 400 ms, index information corresponding to the MR starting duration is 0; when MR starting duration is 500 ms, index information corresponding to the MR starting duration is 1; when MR starting duration is 600 ms, index information corresponding to the MR starting duration is 1; when MR starting duration is 700 ms, index information corresponding to the MR starting duration is 1; when MR starting duration is 800 ms, index information corresponding to the MR starting duration is 1. When MR starting duration of UE is 100 ms, 200 ms, 300 ms, or 400 ms, a PF corresponding to the UE may be PF0; or when MR starting duration of UE is 500 ms, 600 ms, 700 ms, or 800 ms, a PF corresponding to the UE may be PF1.

Optionally, when two or more segments of predefined MR starting duration correspond to a same index value, the system broadcast message may carry only a larger segment of MR starting duration in the two or more segments of MR starting duration. For example, when MR starting duration is 100 ms, 200 ms, 300 ms, or 400 ms, index information corresponding to the MR starting duration is 0. In this case, the system broadcast message may carry only MR starting duration that is 400 ms.

In Table 4, the offset set supported by the base station may include N (for example, two) first offsets. When the two first offsets are related to the MR starting duration, the two first offsets in the offset set may include {400 ms, 800 ms}; or when the two first offsets are related to the MR starting duration and a second offset (for example, 20 ms), the four first offsets in the offset set include {420 ms, 820 ms}.

In Table 4, each of the two pieces of index information may correspond to one first offset. For example, when index information is 0, a first offset corresponding to the index information is 400 ms/420 ms; and when index information is 1, a first offset corresponding to the index information is 800 ms/820 ms.

1302: The UE reports capability information of an MR of the UE, where the capability information of the MR includes the MR starting duration.

1303: The base station sends, to an AMF, the MR starting duration reported by the UE.

For steps 1302-1303, refer to the related descriptions in steps 1002-1003. Details are not described herein again.

1304: The base station obtains a paging message of the UE, calculates a target PF corresponding to to-be-paged UE, and determines a time domain position of an LPWUS based on a time domain position of the target PF and a target offset that correspond to the to-be-paged UE.

In this embodiment of this application, the base station may determine, based on index information corresponding to MR starting duration of the to-be-paged UE, the target PF corresponding to the to-be-paged UE.

The target offset corresponding to the to-be-paged UE is one of the N first offsets broadcast by the base station. The base station may determine the index information (target index information) based on the MR starting duration corresponding to the to-be-paged UE, and then determine the target offset based on the target index information. The target offset is a first offset corresponding to the target index information.

For example, the information carried in the system broadcast message is shown in Table 1. It is assumed that to-be-paged UE is UE1. If MR starting duration of UE1 is 800 ms, index information (target index information) corresponding to the MR starting duration is 7, and a first offset corresponding to the index information is 800 ms. That is, a target offset corresponding to UE1 is 800 ms.

For example, the information carried in the system broadcast message is shown in Table 2. It is assumed that to-be-paged UE is UE1. If MR starting duration of UE1 is 800 ms, index information (target index information) corresponding to the MR starting duration is 7, and a first offset corresponding to the index information is 820 ms. That is, a target offset corresponding to UE1 is 800 ms.

For example, the base station may calculate, based on Formula (3), a system frame number of the target PF corresponding to the UE in each DRX cycle. $\left(SFN+PF_offset\right) mod T = \left(T div N\right) * \left(index mod N\right)$ (3)

SFN indicates the system frame number. PF_offset indicates an offset of a PF, and T indicates the DRX cycle. For example, the DRX cycle may be 32, 64, 128, or 256 radio frames. N indicates a quantity, of PFs in a DRX cycle, configured in a network. index is used to indicate a position of the PF. index≤N.

For example, if index is 0, it indicates that the target PF corresponding to the UE (namely, a PF used by the UE to monitor the paging message) is a first PF in the DRX cycle, that is, PF0. If index is 1, it indicates that the PF corresponding to the UE is a second PF in the DRX cycle, that is, PF1.

The base station may allocate UEs with same or similar MR starting duration to a same PF/PO, and wake up UEs in one PF/PO by using one LPWUS.

The base station may determine the time domain position of the LPWUS based on the target PF and the target offset that correspond to the to-be-paged UE (for example, UE1). The time domain position of the LPWUS may be a moment or a time point. For example, the time domain position of the LPWUS may be a time domain position (a moment or a time point) that is the target offset (or the target offset and the second offset) ahead of the start position (a start moment) of the target PF. For details, refer to related descriptions in step 1004. Details are not described herein.

1305: The base station sends the LPWUS.

For a PF/PO in which there is to-be-paged UE, the base station may send the LPWUS in on-duration (on duration) before or after a time domain position of the LPWUS (namely, the time domain position, of the LPWUS, determined in the foregoing step (step 1304)) that corresponds to the PF/PO, to wake up the MR of the to-be-paged UE.

Duration of the LPWUS may be one or more symbols or slots. This is not specifically limited in this application.

1306: The UE receives the LPWUS sent by the base station.

In this embodiment of this application, the UE may determine, based on the index information corresponding to the MR starting duration of the UE, the target PF corresponding to the UE. For example, the information carried in the system broadcast message is shown in Table 1. If the MR starting duration of UE1 is 800 ms, the index information (target index information) corresponding to the MR starting duration is 7, and a PF corresponding to UE1 may be PF7.

The UE may calculate, based on Formula (3), the system frame number of the target PF corresponding to the UE. For Formula (3), refer to the related descriptions in step 1304. Details are not described herein again.

In this embodiment of this application, the UE (each UE in a coverage area of the base station) may determine, based on the time domain position of the target PF and the target offset that correspond to the UE, the time domain position for receiving the LPWUS.

The UE may determine the index information (target index information) based on the MR starting duration corresponding to the UE, and then determine the target offset based on the target index information. The target offset is the first offset corresponding to the target index information.

For example, the information carried in the system broadcast message is shown in Table 1. If MR starting duration of UE1 is 800 ms, index information (target index information) corresponding to the MR starting duration is 7, and a first offset corresponding to the index information is 800 ms. That is, a target offset corresponding to UE1 is 800 ms. For example, the information carried in the system broadcast message is shown in Table 2. If MR starting duration of UE1 is 800 ms, index information (target index information) corresponding to the MR starting duration is 7, and a first offset corresponding to the index information is 820 ms. That is, a target offset corresponding to UE1 is 800 ms.

The following describes, by using an example in which the information carried in the system broadcast message is shown in Table 3, how the base station sends the LPWUS and how the UE monitors the LPWUS.

It can be learned from Table 3 that, the base station may allocate UEs whose MR starting duration is 100 ms and 200 ms to PF0, allocate UEs whose MR starting duration is 300 ms and 400 ms to PF1, allocate UEs whose MR starting duration is 500 ms and 600 ms to PF2, and allocate UEs whose MR starting duration is 700 ms and 800 ms to PF3.

It is assumed that to-be-paged UEs include UE1 and UE2. If MR starting duration of UE1 is 100 ms, and MR starting duration of UE2 is 200 ms, target PFs corresponding to UE1 and UE2 are PF1. It is assumed that to-be-paged UEs are UE3 and UE4. If MR starting duration of UE3 is 300 ms, and MR starting duration of UE4 is 400 ms, target PFs corresponding to UE3 and UE4 are PF2.

In a possible example, the target offset corresponding to the UE is greater than or equal to the sum of the MR starting duration of the UE and the second offset. In this case, because the target offset includes the second offset, the base station may determine the time domain position of the LPWUS based on the target PF and the target offset that correspond to the to-be-paged UE.

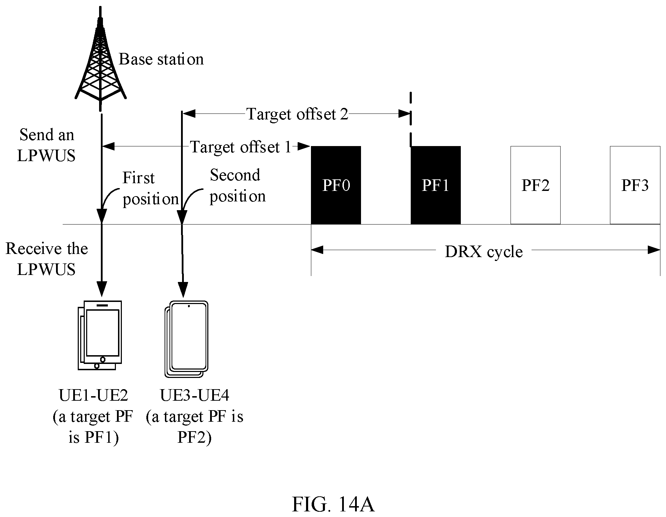

As shown in FIG. 14A, the base station may send the LPWUS (first LPWUS) in on-duration before or after a first position, to wake up an MR of UE1/UE2. The base station may send the LPWUS (second LPWUS) in on-duration before or after a second position, to wake up an MR of UE3/UE4. The first position may be determined based on a target PF (PF0) and a target offset (target offset 1) that correspond to UE1/UE2. For example, the first position may be a time domain position that is the target offset 1 (for example, 820 ms) ahead of a start position of the target PF (PF0). The second position may be determined based on a target PF (PF1) and a target offset (target offset 2) that correspond to UE3/UE4. For example, the second position may be a time domain position that is the target offset 2 (for example, 420 ms) ahead of a start position of PF1.

In another possible example, the target offset corresponding to the UE is greater than or equal to the MR starting duration of the UE. In this case, because the target offset does not include the second offset, the base station may determine the time domain position of the LPWUS based on the target PF, the target offset, and the second offset that correspond to the to-be-paged UE.

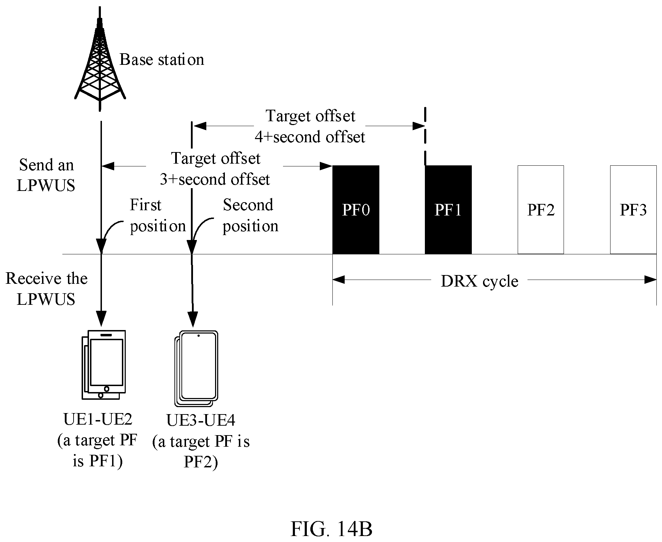

As shown in FIG. 14B, the base station may send the LPWUS (first LPWUS) in on-duration before or after a first position, to wake up an MR of UE1/UE2. The base station may send the LPWUS (second LPWUS) in on-duration before or after a second position, to wake up an MR of UE3/UE4. The first position may be determined based on a target PF (PF0) and a target offset (target offset 3) that correspond to UE1/UE2, and the second offset. For example, the first position may be a time domain position that is the target offset (for example, 800 ms) and the second offset (for example, 20 ms) ahead of a start position of PF0. The second position may be determined based on a target PF (PF1) and a target offset (target offset 4) that correspond to UE3/UE4, and the second offset. For example, the second position may be a time domain position that is the target offset 4 (for example, 400 ms) and the second offset (for example, 20 ms) ahead of a start position of PF1.

The following describes how UE1-UE4 monitor the LPWUS.

In a possible example, the target offset corresponding to the UE is greater than or equal to the sum of the MR starting duration of the UE and the second offset. In this case, because the target offset includes the second offset, the UE may determine the time domain position of the LPWUS based on the target PF and the target offset.

When the base station configures two first offsets (for example, 220 ms and 420 ms), a target offset (target offset 1) corresponding to UE1/UE2 may be 220 ms, and target offsets (target offset 2) respectively corresponding to UE3/UE4 are the same and may be 420 ms.

As shown in FIG. 14A, UE1/UE2 may monitor a first LPWUS in on-duration before or after a first position. UE3/UE4 may monitor a second LPWUS in on-duration before or after a second position. The first position may be determined by UE1/UE2 based on a target PF (PF0) and a target offset that correspond to UE1/UE2 (target offsets respectively corresponding to UE1/UE2 are the same, for example, are a target offset 1). For example, the first position may be a time domain position that is the target offset 1 (for example, 220 ms) ahead of a start position of PF0. The second position may be determined by UE3/UE4 based on a target PF (PF1) and a target offset that correspond to UE3/UE4 (target offsets respectively corresponding to UE3/UE4 are the same, for example, are a target offset 2). For example, the second position may be a time domain position that is the target offset 2 (for example, 420 ms) ahead of a start position of PF1.

In another possible example, the target offset corresponding to the UE is greater than or equal to the MR starting duration of the UE. In this case, because the target offset does not include the second offset, the UE may determine the time domain position of the LPWUS based on the target PF, the target offset, and the second offset that correspond to the to-be-paged UE.

When the base station configures two first offsets (for example, 200 ms and 400 ms), a target offset (target offset 3) corresponding to UE1/UE2 may be 200 ms, and target offsets (target offset 4) respectively corresponding to UE3/UE4 are the same and may be 400 ms.

As shown in FIG. 14B, UE1/UE2 may monitor a first LPWUS in on-duration before or after a first position. UE3/UE4 may monitor a second LPWUS in on-duration before or after a second position. The first position may be determined by UE1/UE2 based on a target PF (PF0) and a target offset that correspond to UE1/UE2 (target offsets respectively corresponding to UE1/UE2 are the same, for example, are a target offset 3), and the second offset. For example, the first position may be a time domain position that is the target offset (for example, 200 ms) and the second offset (for example, 20 ms) ahead of a start position of PF0. The second position may be separately determined by UE3/UE4 based on a target PF (PF1) and a target offset that correspond to UE3/UE4 (target offsets respectively corresponding to UE3/UE4 are the same, for example, are a target offset 4), and the second offset. For example, the second position may be a time domain position that is the target offset 4 (for example, 400 ms) and the second offset (for example, 20 ms) ahead of a start position of PF1.

In this embodiment of this application, the UE may monitor the LPWUS through an LR. The LR of the UE may always be in an operating state (non-sleep state), or the LR of the UE may be in an operating state (non-sleep state) within a preset time period based on a preset rule. This is not specifically limited in this application.

1307: The UE starts the MR based on the LPWUS, to monitor a PDCCH channel through the MR to determine whether there is a paging message of the UE.

For a specific process, refer to the related descriptions in step 1007. Details are not described herein.

Based on the method provided in this embodiment of this application, the base station may allocate UEs with same or similar MR starting duration to a PF, and wake up an MR of any UE in the PF by using an LPWUS. In this way, network resource overheads can be reduced, and a paging delay and power consumption can be reduced.

In still yet some other embodiments, in one DRX cycle, a base station may allocate UEs with same or similar MR starting duration to a plurality of consecutive PFs, and wake up UEs in the plurality of consecutive PFs by using one LPWUS.

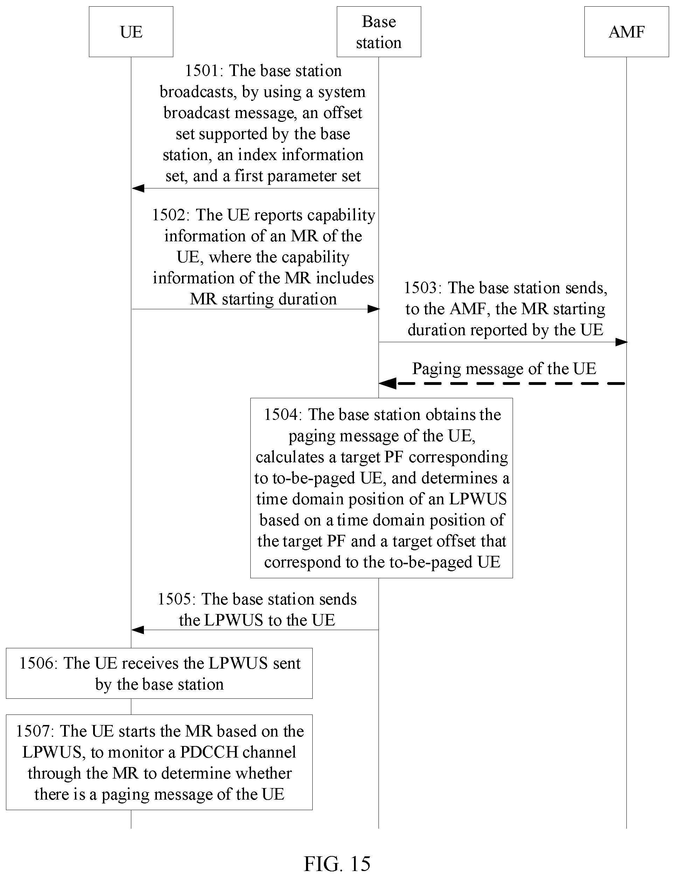

As shown in FIG. 15, an embodiment of this application provides an LPWUS transmission method. An example in which a terminal device is UE and a network device is a base station is used for description. The method includes the following steps.

1501: The base station broadcasts, by using a system broadcast message, an offset set, an index information set, and a first parameter set that are supported by the base station.

The system broadcast message carries the offset set, the index information set, and the first parameter set that are supported by the base station.

The offset set supported by the base station may include N first offsets. For the offset set supported by the base station, refer to related descriptions in step 1001. Details are not described herein again.

The index information set may include N pieces of index information (index). For the index information set, refer to the related descriptions in step 1301, and details are not described herein again.

The first parameter set includes N first parameters (for example, DistrLen), and each first parameter corresponds to one of the N pieces of index information. Each first parameter is used to indicate a quantity (a number) of PFs, and the quantity of PFs may be a quantity of consecutive PFs. The consecutive PFs may be two or more adjacent PFs in one DRX cycle.

Optionally, the system broadcast message further includes a plurality of pieces of predefined MR starting duration information. Each of the plurality of pieces of predefined MR starting duration information corresponds to one piece of index information in the index information set. Each first parameter may further correspond to one of the plurality of pieces of MR starting duration information.

The base station may allocate UEs with same or similar MR starting duration to the plurality of consecutive PFs based on the index information and the first parameter.

It should be noted that, when UEs camped on a cell of the base station include a particularly large quantity (for example, exceeds a preset threshold) of UEs in a specific MR starting duration interval (for example, a first MR starting duration interval), only UEs in the first MR starting duration interval (for example, an interval of 200 ms/an interval of 200 ms-400 ms) are allocated to one PF (for example, PF1). In this case, too many UEs may be paged in the PF (for example, PF1), and some UEs possibly cannot be paged in a timely manner in the PF, resulting in a delay problem and a power consumption waste problem (the UE start an MR to receive a paging message, but the MR does not receive the paging message; and the UE may receive the paging message until a next DRX cycle, which wastes a power consumption waste of the MR).

In some embodiments of this application, the UEs in the first MR starting duration interval may be evenly allocated to a plurality of consecutive PFs, to avoid too many UEs that may be paged in a specific PF. Therefore, a delay problem and a power consumption waste problem that are caused when some UEs cannot be paged in a timely manner in the PF can be avoided.

For example, when the quantity of PFs in the DRX cycle is greater than or equal to 8, content indicated by information carried in the system broadcast message may be shown in Table 5.

**Table 5**

| A quantity of PFs in a DRX cycle is 8 | | | | | | | | |
|---|---|---|---|---|---|---|---|---|
| MR starting duration | 100 ms | 200 ms | 300 ms | 400 ms | 500 ms | 600 ms | 700 ms | 800 ms |
| index | 0 | 1 | 2 | 3 | 4 | 5 | 6 | 7 |
| DistrLen | 0 | 2 | 0 | 0 | 0 | 0 | 0 | 0 |
| First offset | 100 ms | 200 ms | 300 ms | 400 ms | 500 ms | 600 ms | 700 ms | 800 ms |

In Table 5, a plurality of segments of MR starting duration, for example, eight segments of MR starting duration, may be predefined, including {100 ms, 200 ms, 300 ms, 400 ms, 500 ms, 600 ms, 700 ms, 800 ms}. The offset set supported by the base station may include eight (that is, N=8) first offsets, and the index information set may include eight (that is, N=8) pieces of index information. The eight first offsets in the offset set include {100 ms, 200 ms, 300 ms, 400 ms, 500 ms, 600 ms, 700 ms, 800 ms}. The eight pieces of index information in the index information set may include {0, 1, 2, 3, 4, 5, 6, 7}. N (for example, 8) parameters DistrLen in the first parameter set may include {0, 2, 0, 0, 0, 0, 0, 0}.

In Table 5, when DistrLen is 0, it indicates that a quantity of PFs corresponding to the UE in one DRX cycle is 1. When DistrLen is 2, it indicates that a quantity of PFs corresponding to the UE in one DRX cycle is 2.

Optionally, when DistrLen may be 1, it indicates that a quantity of PFs corresponding to the UE in one DRX cycle is 1.

In Table 5, each of the eight pieces of index information in the index information set may be related to one of the N parameters DistrLen. Each parameter DistrLen may further correspond to one of eight pieces of MR starting duration information. For example, a correspondence among the eight pieces of MR starting duration information, the eight pieces of index information, and the eight parameters DistrLen may be denoted as {{100 ms, 0, 0}, {200 ms, 1, 2}, {300 ms, 2, 0}, {400 ms, 3, 0}, {500 ms, 4, 0}, {600 ms, 5, 0}, {700 ms, 6, 0}, {800 ms, 7, 0}}. {100 ms, 0, 0} indicates that when MR starting duration is 100 ms, index information corresponding to the MR starting duration is 0, and DistrLen corresponding to the index information is 100 ms; {200 ms, 1, 2} indicates that when MR starting duration is 200 ms, index information corresponding to the MR starting duration is 1, and DistrLen corresponding to the index information is 2; and so on.

In Table 5, each of the eight pieces of index information corresponds to one first offset. For example, when index information is 0, a first offset corresponding to the index information is 100 ms; when index information is 1, a first offset corresponding to the index information is 200 ms; when index information is 2, a first offset corresponding to the index information is 300 ms; when index information is 3, a first offset corresponding to the index information is 400 ms; when index information is 4, a first offset corresponding to the index information is 500 ms; when index information is 5, a first offset corresponding to the index information is 600 ms; when index information is 6, a first offset corresponding to the index information is 700 ms; and when index information is 7, a first offset corresponding to the index information is 800 ms.

1502: The UE reports capability information of an MR of the UE, where the capability information of the MR includes MR starting duration.

1503: The base station sends, to an AMF, the MR starting duration reported by the UE.

For steps 1502-1503, refer to the related descriptions in steps 1002-1003. Details are not described herein again.

1504: The base station obtains a paging message of the UE, calculates a target PF corresponding to to-be-paged UE, and determines a time domain position of an LPWUS based on a time domain position of the target PF and a target offset that correspond to the to-be-paged UE.

In this embodiment of this application, in this embodiment of this application, the base station may determine, based on index information corresponding to MR starting duration of the to-be-paged UE and a first parameter (DistrLen) corresponding to the index information, the target PF corresponding to the to-be-paged UE.

For example, information carried in the system broadcast message is shown in Table 5. It is assumed that the to-be-paged UE is UE1, MR starting duration of UE1 is 200 ms, index information corresponding to the MR starting duration is 1, and DistrLen corresponding to the index information is 2. In this case, the target PF corresponding to the to-be-paged UE may include two consecutive PFs (for example, PF0 and PF1).

For example, the base station may calculate, based on Formula (4), a system frame number of the target PF corresponding to the UE in each DRX cycle. $\left(SFN+PF_offset\right) mod T = \left(T div N\right) * \left(\left(index+offset_1\right) mod N\right)$ (4)

When offset_1=UE_ID mod DistrLen, for example, when DistrLen=2, and UE_ID is 1, a range of offset_1 is 0 and 1. For other parameters, refer to the foregoing related descriptions of Formula (3). Details are not described herein again.

The base station may determine the time domain position of the LPWUS based on the target PF and the target offset that correspond to the to-be-paged UE (for example, UE1). The time domain position of the LPWUS may be a moment or a time point. For example, the time domain position of the LPWUS may be a time domain position (a moment or a time point) that is the target offset (or the target offset and the second offset) ahead of the start position (a start moment) of the target PF. For details, refer to related descriptions in step 1004. Details are not described herein.

1505: The base station sends the LPWUS to the UE.

For a PF/PO in which there is to-be-paged UE, the base station may send the LPWUS in on-duration (on duration) before or after a time domain position of the LPWUS (namely, the time domain position, of the LPWUS, determined in the foregoing step (step 1504)) that corresponds to the PF/PO, to wake up the MR of the to-be-paged UE.

Duration of the LPWUS may be one or more symbols or slots. This is not specifically limited in this application.

1506: The UE receives the LPWUS sent by the base station.

In this embodiment of this application, in this embodiment of this application, the UE (each UE in a coverage area of the base station) may determine, based on index information corresponding to MR starting duration of the UE and a first parameter (DistrLen) corresponding to the index information, the target PF corresponding to the UE.

The UE may calculate, based on Formula (4), a system frame number of the target PF corresponding to the UE in each DRX cycle.

Then, the UE may determine the time domain position of the LPWUS based on the target PF and the target offset that correspond to the UE.

The UE may determine the index information (target index information) based on the MR starting duration corresponding to the UE, and then determine the target offset based on the target index information. The target offset is the first offset corresponding to the target index information. For a specific process, refer to the related descriptions in step 1306. Details are not described herein.

In this embodiment of this application, the UE may monitor the LPWUS through an LR. The LR of the UE may always be in an operating state (non-sleep state), or the LR of the UE may be in an operating state (non-sleep state) within a preset time period based on a preset rule. This is not specifically limited in this application.

1507: The UE starts the MR based on the LPWUS, to monitor a PDCCH channel through the MR to determine whether there is a paging message of the UE.

For a specific process, refer to the related descriptions in step 1007. Details are not described herein.

Based on the method provided in this embodiment of this application, the base station may allocate a plurality of UEs with same or similar MR starting duration to a plurality of consecutive PFs, and wake up an MR of any UE in the plurality of PFs by using one LPWUS. In this way, network resource overheads can be reduced, and a paging delay and power consumption can be reduced.

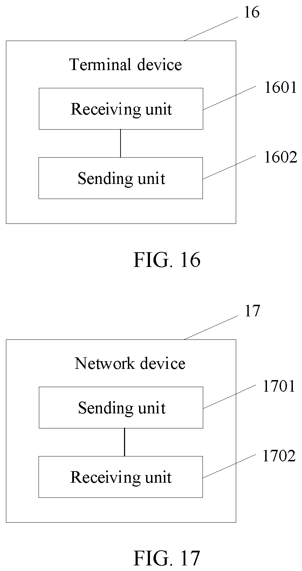

When each functional module is obtained through division corresponding to each function, FIG. 16 is a possible schematic structural diagram of an apparatus 16 in the foregoing embodiment. The apparatus may be a terminal device, and the terminal device includes a receiving unit 1601 and a sending unit 1602. In this embodiment of this application, the receiving unit 1601 is configured to receive a first message from a network device. The first message includes N first offsets, and N is an integer greater than or equal to 1. The receiving unit 1601 is further configured to monitor an LPWUS from the network device at a time domain position of the LPWUS. The LPWUS is used to wake up an MR of the terminal device. The time domain position of the LPWUS is determined based on the N first offsets and a target paging frame PF, and the target PF is a PF in which the terminal device monitors a paging message. Optionally, the sending unit 1602 is configured to send a second message to the network device. The second message includes capability information of a main receiver MR of the terminal device.

In the method embodiment shown in FIG. 10, the receiving unit 1601 is configured to support the terminal device in performing corresponding processes in processes 1001 and 1006 in FIG. 10. The sending unit 1602 is configured to support the terminal device in performing a corresponding process in the process 1002 in FIG. 10. All related content of the steps in the method embodiments may be cited in function descriptions of corresponding functional modules. Details are not described herein again.

In the method embodiment shown in FIG. 13, the receiving unit 1601 is configured to support the terminal device in performing corresponding processes in processes 1301 and 1306 in FIG. 13. The sending unit 1602 is configured to support the terminal device in performing a corresponding process in the process 1302 in FIG. 13. All related content of the steps in the method embodiments may be cited in function descriptions of corresponding functional modules. Details are not described herein again.

In the method embodiment shown in FIG. 15, the receiving unit 1601 is configured to support the terminal device in performing corresponding processes in processes 1501 and 1506 in FIG. 15. The sending unit 1602 is configured to support the terminal device in performing a corresponding process in the process 1502 in FIG. 15. All related content of the steps in the method embodiments may be cited in function descriptions of corresponding functional modules. Details are not described herein again.

When each functional module is obtained through division corresponding to each function, FIG. 17 is a possible schematic structural diagram of an apparatus 17 in the foregoing embodiment. The apparatus may be a network device, and the network device includes a sending unit 1701 and a receiving unit 1702. In this embodiment of this application, the sending unit 1701 is configured to send a first message. The first message includes N first offsets, and N is an integer greater than or equal to 1. The sending unit 1701 is further configured to send an LPWUS at a time domain position of the LPWUS. The LPWUS is used to wake up an MR of a terminal device. The time domain position of the LPWUS is determined based on the N first offsets and a target paging frame PF, and the target PF is a PF in which the terminal device monitors a paging message. The receiving unit 1702 is configured to receive a second message from the terminal device. The second message includes capability information of a main receiver MR of the terminal device.

In the method embodiment shown in FIG. 10, the sending unit 1701 is configured to support the network device in performing the process 1001 in FIG. 10. The receiving unit 1702 is configured to support the network device in performing a part related to the network device in the process 1002 in FIG. 10. All related content of the steps in the method embodiments may be cited in function descriptions of corresponding functional modules. Details are not described herein again.

In the method embodiment shown in FIG. 13, the sending unit 1701 is configured to support the network device in performing the process 1301 in FIG. 13. The receiving unit 1702 is configured to support the network device in performing a part related to the network device in the process 1302 in FIG. 13. All related content of the steps in the method embodiments may be cited in function descriptions of corresponding functional modules. Details are not described herein again.

In the method embodiment shown in FIG. 15, the sending unit 1701 is configured to support the network device in performing the process 1501 in FIG. 15. The receiving unit 1702 is configured to support the network device in performing a part related to the network device in the process 1502 in FIG. 15. All related content of the steps in the method embodiments may be cited in function descriptions of corresponding functional modules. Details are not described herein again.

For example, the terminal device or the network device in the foregoing apparatus embodiments may completely correspond to the terminal device or the network device in the method embodiments, and corresponding modules or units perform corresponding steps. For example, the communication module (transceiver) may perform the sending and/or receiving steps in the method embodiments. Steps other than sending and receiving may be performed by a processing unit (processor). For functions of specific units, refer to the corresponding method embodiments. The sending unit and the receiving unit may form a transceiver unit, and the transmitter and the receiver may form a transceiver to jointly implement a transceiver function. There may be one or more processors.

For example, a function of the terminal device or the network device may be implemented by using a chip, and the processing unit may be implemented by using hardware, or may be implemented by using software. When the processing unit is implemented by using hardware, the processing unit may be a logic circuit, an integrated circuit, or the like. When the processing unit is implemented by using software, the processing unit may be a general-purpose processor, and is implemented by reading software code stored in the storage unit. The storage unit may be integrated into the processor, or may be located outside the processor and exist independently.

The terminal device or the network device in the foregoing apparatus embodiments completely corresponds to the terminal device and the network device in the method embodiments, and corresponding modules or units perform corresponding steps. For example, the sending module (transmitter) method performs the sending steps in the method embodiments, and the receiving module (receiver) performs the receiving steps in the method embodiments. Steps other than sending and receiving may be performed by the processing module (processor). For a function of a specific module, refer to a corresponding method embodiment. The sending module and the receiving module may form a transceiver module, and the transmitter and the receiver may form a transceiver to jointly implement a transceiver function. There may be one or more processors.

Division into the modules or units in embodiments of this application is an example, is merely division into logical functions, and may be other division during actual implementation. In addition, functional modules in embodiments of this application may be integrated into one processor, or each of the modules may exist alone physically, or two or more modules may be integrated into one module. The foregoing integrated module may be implemented in the form of hardware, or may be implemented in a form of a software functional module. For example, in embodiments of this application, the receiving unit and the sending unit may be integrated into the transceiver unit.

All or some of the methods in embodiments of this application may be implemented by using software, hardware, firmware, or any combination thereof. When software is used to implement the foregoing embodiments, all or some of the foregoing embodiments may be implemented in a form of a computer program product. The computer program product includes one or more computer instructions. When the computer program instructions are loaded and executed on a computer, all or some of the procedures or functions according to the embodiments of this application are generated. The computer may be a general-purpose computer, a dedicated computer, a computer network, a network device, user equipment, or other programmable apparatuses. The computer instructions may be stored in a computer-readable storage medium or transmitted from one computer-readable storage medium to another computer-readable storage medium. For example, the computer instructions may be transmitted from one website, computer, server or data center to another website, computer, server or data center in a wired (for example, a coaxial cable, an optical fiber or a digital subscriber line (digital subscriber line, DSL)) or wireless (for example, infrared, wireless or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid state drives, SSD)), or the like.

It is clearly that a person skilled in the art can make various modifications and variations to embodiments of this application without departing from the spirit and scope of this application. This application is intended to cover these modifications and variations to embodiments of this application provided that they fall within the scope of protection defined by the following claims and their equivalent technologies.

## Claims

1. A low-power wake-up signal LPWUS transmission method, comprising:
receiving, by a terminal device, a first message from a network device, wherein the first message comprises N first offsets, and N is an integer greater than or equal to 1; and
monitoring, by the terminal device, an LPWUS from the network device at a time domain position of the LPWUS, wherein the LPWUS is used to wake up an MR of the terminal device, wherein
the time domain position of the LPWUS is determined based on the N first offsets and a target paging frame PF, and the target PF is a PF in which the terminal device monitors a paging message.

2. The method according to claim 1, wherein that the time domain position of the LPWUS is determined based on the N first offsets and the target paging frame PF comprises:
the time domain position of the LPWUS is determined based on a target offset and the target PF, the target offset is determined from the N first offsets based on capability information of the MR of the terminal device, and the target offset is used to indicate an offset between the time domain position of the LPWUS and the target PF.

3. The method according to claim 1 or 2, wherein the method further comprises:
sending, by the terminal device, a second message to the network device, wherein the second message comprises the capability information of the main receiver MR of the terminal device.

4. The method according to claim 2 or 3, wherein the capability information of the MR comprises MR starting duration; and
the target offset is greater than or equal to the MR starting duration; or
the target offset is greater than or equal to a sum of the MR starting duration and a second offset.

5. The method according to claim 4, wherein
the target offset is a smallest first offset in M first offsets, the M first offsets belong to the N first offsets, and M is an integer less than or equal to N; and
each of the M first offsets is greater than or equal to the MR starting duration, or each of the M first offsets is greater than or equal to the sum of the MR starting duration and the second offset.

6. The method according to any one of claims 1-5, wherein
the first message is a system broadcast message.

7. The method according to any one of claims 1-6, wherein the monitoring, by the terminal device, an LPWUS from the network device at a time domain position of the LPWUS comprises:
monitoring, by the terminal device, the LPWUS from the network device in on-duration before or after the time domain position of the LPWUS.

8. The method according to any one of claims 1-7, wherein
not receiving, by the terminal device, the LPWUS from the network device if the MR starting duration indicated by the capability information of the MR of the terminal device is greater than any one of the N first offsets.

9. A low-power wake-up signal LPWUS transmission method, comprising:
sending, by a network device, a first message, wherein the first message comprises N first offsets, and N is an integer greater than or equal to 1; and
sending, by the network device, an LPWUS at a time domain position of the LPWUS, wherein the LPWUS is used to wake up an MR of a terminal device, wherein
the time domain position of the LPWUS is determined based on the N first offsets and a target paging frame PF, and the target PF is a PF in which the terminal device monitors a paging message.

10. The method according to claim 9, wherein that the time domain position of the LPWUS is determined based on the N first offsets and the target paging frame PF comprises:
the time domain position of the LPWUS is determined based on a target offset and the target PF, the target offset is determined from the N first offsets based on capability information of the MR of the terminal device, and the target offset is used to indicate an offset between the time domain position of the LPWUS and the target PF.

11. The method according to claim 9 or 10, wherein the method further comprises:
receiving, by the network device, a second message from the terminal device, wherein the second message comprises the capability information of the main receiver MR of the terminal device.

12. The method according to claim 10 or 11, wherein the capability information of the MR comprises MR starting duration; and
the target offset is greater than or equal to the MR starting duration; or
the target offset is greater than or equal to a sum of the MR starting duration and a second offset.

13. The method according to claim 12, wherein
the target offset is a smallest first offset in M first offsets, the M first offsets belong to the N first offsets, and M is an integer less than or equal to N; and
each of the M first offsets is greater than or equal to the MR starting duration, or each of the M first offsets is greater than or equal to the sum of the MR starting duration and the second offset.

14. The method according to any one of claims 9-13, wherein
the first message is a system broadcast message.

15. The method according to any one of claims 9-14, wherein the sending, by the network device, an LPWUS at a time domain position of the LPWUS comprises:
sending, by the network device, the LPWUS from the network device in on-duration before or after the time domain position of the LPWUS.

16. The method according to any one of claims 9-15, wherein the method further comprises:
sending, by the network device, the capability information of the MR of the terminal device to an access and mobility management function AMF network element.

17. A low-power wake-up signal LPWUS transmission method, comprising:
receiving, by a terminal device, a first message from a network device, wherein the first message comprises N pieces of index information and N first offsets, the N pieces of index information are in one-to-one correspondence with the N first offsets, each of the N pieces of index information is used to indicate a position of a paging frame PF, and N is an integer greater than or equal to 1; and
monitoring, by the terminal device, an LPWUS at a time domain position of the LPWUS, wherein the LPWUS is used to wake up a main receiver MR of the terminal device, wherein
the time domain position of the LPWUS is determined based on the N pieces of index information and the N first offsets.

18. The method according to claim 17, wherein that the time domain position of the LPWUS is determined based on the N pieces of index information and the N first offsets comprises:
the time domain position of the LPWUS is determined based on a target offset and a target PF that correspond to the terminal device, the target PF is determined based on target index information, the target index information is determined based on the N pieces of index information, the target offset is determined based on the N first offsets, and the target offset is used to indicate an offset between the time domain position of the LPWUS and the target PF.

19. The method according to claim 18, wherein
the target PF is a PF in which a plurality of terminal devices whose MR starting duration is the same as or similar to MR starting duration of the terminal device monitor a paging message.

20. The method according to claim 17 or 18, wherein the target PF satisfies the following formula: $\left(SFN+PF_offset\right) mod T = \left(T div N\right) * \left(index mod N\right) ,$ wherein
SFN indicates a system frame number, PF_offset indicates an offset of a PF, T indicates a discontinuous reception DRX cycle, N indicates a quantity of PFs in the DRX cycle, index indicates a position of the target PF in the DRX cycle, and index≤N.

21. The method according to any one of claims 17-20, wherein
the first message further comprises N first parameters, and the N first parameters are in one-to-one correspondence with the N pieces of index information; and
that the target PF is determined based on the target index information comprises:
the target PF is determined based on the target index information and a target first parameter, the target first parameter is determined based on the N first parameters, the target index information is used to indicate a start position of the target PF, and the target first parameter is used to indicate a quantity of target PFs.

22. The method according to claim 21, wherein the target PF satisfies the following formula: $\left(SFN+PF_offset\right) mod T = \left(T div N\right) * \left(\left(index+offset_1\right) mod N\right) ,$ wherein
SFN indicates a system frame number, PF_offset indicates an offset of a PF, T indicates a DRX cycle, N indicates a quantity of PFs in the DRX cycle, index indicates a start position of the target PF in the DRX cycle, index≤N, offset_1=UE_ID mod DistrLen, DistrLen indicates the quantity of target PFs, and UE_ID indicates an identifier of the terminal device.

23. A low-power wake-up signal LPWUS transmission method, comprising:
sending, by a network device, a first message, wherein the first message comprises N pieces of index information and N first offsets, the N pieces of index information are in one-to-one correspondence with the N first offsets, each of the N pieces of index information is used to indicate a position of a paging frame PF, and N is an integer greater than or equal to 1; and
sending, by the network device, an LPWUS at a time domain position of the LPWUS, wherein the LPWUS is used to wake up a main receiver MR of a terminal device, wherein
the time domain position of the LPWUS is determined based on the N pieces of index information and the N first offsets.

24. The method according to claim 23, wherein that the time domain position of the LPWUS is determined based on the N pieces of index information and the N first offsets comprises:
the time domain position of the LPWUS is determined based on a target offset and a target PF that correspond to the terminal device, the target PF is determined based on target index information, the target index information is determined based on the N pieces of index information, the target offset is determined based on the N first offsets, and the target offset is used to indicate an offset between the time domain position of the LPWUS and the target PF.

25. The method according to claim 24, wherein
the target PF is a PF in which a plurality of terminal devices whose MR starting duration is the same as or similar to MR starting duration of the terminal device monitor a paging message.

26. The method according to claim 23 or 24, wherein the target PF satisfies the following formula: $\left(SFN+PF_offset\right) mod T = \left(T div N\right) * \left(index mod N\right) ,$ wherein
SFN indicates a system frame number, PF_offset indicates an offset of a PF, T indicates a discontinuous reception DRX cycle, N indicates a quantity of PFs in the DRX cycle, index indicates a position of the target PF in the DRX cycle, and index≤N.

27. The method according to any one of claims 23-26, wherein
the first message further comprises N first parameters, and the N first parameters are in one-to-one correspondence with the N pieces of index information; and
that the target PF is determined based on the target index information comprises:
the target PF is determined based on the target index information and a target first parameter, the target first parameter is determined based on the N first parameters, the target index information is used to indicate a start position of the target PF, and the target first parameter is used to indicate a quantity of target PFs.

28. The method according to claim 27, wherein the target PF satisfies the following formula: $\left(SFN+PF_offset\right) mod T = \left(T div N\right) * \left(\left(index+offset_1\right) mod N\right) ,$ wherein
SFN indicates a system frame number, PF_offset indicates an offset of a PF, T indicates a DRX cycle, N indicates a quantity of PFs in the DRX cycle, index indicates a start position of the target PF in the DRX cycle, index≤N, offset_1=UE_ID mod DistrLen, DistrLen indicates the quantity of target PFs, and UE_ID indicates an identifier of the terminal device.

29. A communication apparatus, comprising units configured to perform the method according to any one of claims 1-8, claims 9-16, claims 17-22, or claims 23-28.

30. A communication apparatus, wherein the communication apparatus comprises a processor, and the processor is coupled to a memory; and
the memory is configured to store computer-executable instructions, and when the communication apparatus runs, the processor executes the computer-executable instructions, so that the communication apparatus performs the method according to any one of claims 1-8, claims 9-16, claims 17-22, or claims 23-28.

31. A computer-readable storage medium, comprising instructions, wherein when the instructions are run on a computer, the computer is enabled to perform the method according to any one of claims 1-8, claims 9-16, claims 17-22, or claims 23-28.

32. A chip system, comprising a processor, wherein the processor is coupled to a memory, and the processor executes computer-executable instructions stored in the memory, to implement the method according to any one of claims 1-8, claims 9-16, claims 17-22, or claims 23-28.

33. A communication system, comprising a terminal device and a network device, wherein
the terminal device is configured to perform the method according to any one of claims 1-8 or claims 17-22, and the network device is configured to perform the method according to any one of claims 9-16 or claims 23-28.
